# EUROPEAN PATENT APPLICATION

(11) **EP 3 148 223 A2**
(43) Date of publication of application: **29.03.2017**
(21) Application number: 16187205.6
(22) Date of filing: 05.09.2016
(51) Int. Cl.: H04S 7/00

(54) **A METHOD OF RELATING A PHYSICAL LOCATION OF A LOUDSPEAKER OF A LOUDSPEAKER SYSTEM TO A LOUDSPEAKER IDENTIFIER**

(30) Priority: 04.09.2015 DK 201570574
(71) Applicant: Music Group IP Ltd., Tortola (VG)
(72) Inventor: BEHRINGER, Ulrich, 1209 Makati City (PH)
(74) Representative: Patentgruppen A/S

(57) **Abstract**

A method of relating a physical location of a loudspeaker of a loudspeaker system to a loudspeaker identifier, the loudspeaker system comprising a plurality of loudspeakers connected by at least one loudspeaker bus and communicatively coupled to a bus driver, the loudspeakers being mounted at different locations in an aggregated environment, and the aggregated environment comprising one or more local environments. The physical location of a loudspeaker and a loudspeaker identifier are related to each other based on environmental properties determined by a mobile device.

## Description

### Field of the invention

The present invention relates to locating and configuring loudspeakers in a loudspeaker system.

### Background of the invention

It is well known in the art to apply loudspeakers to address the public by audio. Such systems may typically be wired or wireless and the systems use a central control to manage what to be rendered and where to render. In many such prior art systems, loudspeakers are distributed over a wide area with the aim of addressing the public where the public may be and with relevant audio. Such systems may e.g. be adapted for alerting the public in waiting rooms with relevant travel information, providing background music in stores, enabling internal communication between attendants, etc. The options are virtually endless and such loudspeaker system may cover vast areas of train stations, airport, public buildings, offices hotels, restaurants, etc. Conventionally commercial systems are relatively non-flexible due to the fact that loudspeakers in such systems typically can only be configured and managed according to their physically cabling, whereby reconfiguration and adjustments require cumbersome re-installation work involving rewiring the loudspeakers to their new configuration.

### Summary of the invention

In one aspect, the invention relates to a method of relating a physical location of a loudspeaker of a loudspeaker system to a loudspeaker identifier, the loudspeaker system comprising a plurality of loudspeakers connected by at least one loudspeaker bus and communicatively coupled to a bus driver,
the loudspeakers being mounted at different locations in an aggregated environment, the aggregated environment comprising one or more local environments, the method comprising the steps of
- providing a mobile device comprising a camera, a display, a memory arrangement and a computing processor arrangement powered by a battery,
- the computing processor arrangement processing data on the basis of algorithms stored in said memory arrangement, the display being arranged for displaying images captured by the camera and processed by the computing processor arrangement,
- capturing an image of an environment by means of the camera of the mobile device,
- extracting environment properties on the basis of the image by means of said computing processor arrangement,
- calculating the physical location of one or more loudspeakers on the basis of said environment properties,
- manually or automatically relating the physical location of one or more loudspeakers as a relation to a corresponding loudspeaker identifier at least partly on the basis of said calculated physical location, and
- storing said relation in a location database associated to said bus driver.

According to the provisions of the invention, it is possible to provide individually addressable speakers in large loudspeaker setups with many speakers due to the fact that the setup procedure facilitates that the physical mounting of the loudspeaker wires of the system may be performed with little or no consideration to the final requirements with respect to addressing of individual speakers or groups of speakers. Another advantage of the invention is that the technician may mount the physical loudspeaker bus under consideration of the individual environments rather than establishing a bus layout reflecting the intended use of the final system.

This advantage leads to a further huge advantage, namely that the requirements with respect to the addressability of the speakers or groups of speaks will not have a negative impact on the audio design in the different environments. This freedom to establish local environments optimized with respect to audio is significant.

A further important feature of the invention is that one or more loudspeaker systems may be setup in a reliable and feasible way, thereby obtaining a system where the functionality is well defined, thereby availing that the system works according to intention when addressing specific or groups of loudspeakers. Moreover, it is also beneficial that groups or specific loudspeakers may be located easily and with less risk of mistakes when maintenance of the loudspeakers or the loudspeaker system is needed.

In an embodiment, an advantageous feature is that the determined and stored relations may very easily be changed or adjusted at a later occasion.

An environment may be understood as a room, an open space, hall, etc., i.e. any location relevant for coverage of a loudspeaker system.

An image of an environment is understood as some kind of image covering the complete environment or some of the environment. The image may comprise more than one separate image. The coverage of the image should be sufficient to enable the computing processor arrangement to calculate the physical position of a loudspeaker selected by the user of the mobile device.

The location database may be stored centrally integrated with the bus driver or it may reside in one or more decentral location databases e.g. comprised in mobile devices as long as the location database is made available to the bus driver to facilitate valid addressing of the loudspeakers when need may be or as a part of a cloud based server system.

A loudspeaker bus may be any communicative coupling of loudspeakers or nodes for indirectly coupling loudspeaker, to a bus driver for controlling the audio rendered by the loudspeakers. In advantageous embodiments the loudspeaker bus, bus driver and at least some of the loudspeakers or nodes facilitate communication of data, e.g. control parameters, in addition to audio signals, and even more preferred embodiments also facilitate some degree of bi-directional communication allowing nodes and loudspeakers to communicate with the bus driver to initialization, status, error or other messages.

An advantageous embodiment is obtained when the loudspeaker system comprises as loudspeaker bus one or more powered audio buses and associated bus drivers, the multiple loudspeakers being comprised by loudspeaker nodes of said powered audio buses, and the central controller being connected to or integrated with said bus drivers. A powered audio bus provides both audio signals and power to the connected loudspeakers and/or nodes.

In loudspeaker systems where powered audio buses are used to distribute, interconnect and power loudspeaker nodes comprising amplifiers and loudspeakers, embodiments of the present invention may be highly relevant. In some powered audio bus systems, the bus drivers or central controller may know the electrical location in terms of distance or neighbours along the bus cable of the loudspeaker nodes, e.g. the sequence of loudspeakers and nodes. However, as the loudspeakers and powered audio bus may be installed according to any arbitrary topology as the typically long buses, for example 20 to 100 meters, turn and twist around above the ceiling in any unpredictable way, it is very advantageous to be able to map the electrically identified loudspeaker nodes with a spatial layout or environment.

An advantageous embodiment is obtained when the loudspeakers of the loudspeaker system are individually addressable by the bus driver for rendering of audio provided by the bus driver.

The loudspeakers may be individually addressable in many ways. The bus driver may thus address a single specific loudspeaker or groups of loudspeakers. The loudspeakers may be located with respect to physical location in a very specific way where the specific location of each speaker is located in a 2D or 3D localization scheme. The loudspeakers may also be located in groups, where the individual loudspeakers are specifically physically located. In a further embodiment, the loudspeakers may be physically located as a group of loudspeakers merely located with respect to a predefined zone. The bus driver may thus address individual loudspeakers based on knowledge of where the individual loudspeaker is and/or address one or more groups based on knowledge of where the individual loudspeaker is.

An advantageous embodiment is obtained when the loudspeakers of the loudspeaker system are individually addressable by the bus driver for rendering of audio provided by the bus driver under the control of a central controller.

An advantageous embodiment is obtained when the loudspeaker system comprises a bus driver communicatively coupled with one or more loudspeaker buses.

According to an embodiment of the present invention, it is possible to merge different buses into one combined layout of a loudspeaker network, and the location of speakers in one environment may e.g. be obtained by means of two different buses coupled to the same central bus driver. The same bus driver in the present context designates that the bus driver is logically unified. The electrical coupling may be obtained by one or a plurality of bus connections.

An advantageous embodiment is obtained when the loudspeaker system comprises two or more loudspeaker buses, wherein the buses are communicatively coupled to said bus driver enabling addressing of loudspeakers arranged in more than one loudspeaker bus and wherein the addressing of the loudspeakers arranged in more than one loudspeaker bus is controlled by a central controller communicatively coupled to said bus driver.

An advantageous embodiment is obtained when the loudspeaker system comprises two or more loudspeaker buses, wherein the buses are arranged in an aggregated environment, the aggregated environment comprising at least two separate environments and where at least one environment comprises at least two buses.

An advantageous embodiment is obtained when the physical location of the one or more loudspeakers is determined on the basis of said image and a user provided image reference.

The provision of a user provided image reference will allow the user to actively select or pinpoint one or more loudspeakers relevant for determination of physical position.

A user provided reference may be provided in several different ways. One possible solution may be to include a fixed reference visually on the display of the mobile device, i.e. where the display visualizes a fixed aim by means of which a user may point the mobile device to a loudspeaker in question and thereby pin-point the position of a speaker. Then, software run on the computer processor arrangement may combine the picked position and extracted physical environment properties.

Another solution may simply imply that a user uses the display to pin-point the speaker(s) in question e.g. by a touch screen and then leaving software run on the computer processor arrangement to combine the picked position and extracted physical environment properties into one or more physical locations of loudspeakers.

The user provided image references may therefore typically be given as a pin-point application functioning in augmented reality application running on the mobile device, thereby allowing a user visually to pick a specific loudspeaker for determination of the location in the environment, e.g. a room, which is then deduced by means of an augmented reality application running on the mobile device.

An advantageous embodiment is obtained when the physical location of the one or more loudspeakers is determined on the basis of said image and automatic recognition of loudspeakers in the captured image and wherein the automatic recognition is calculated on the basis of the image by means of said computing processor arrangement.

Automatic recognition of loudspeakers may be performed in several different ways. The algorithms stored in said memory arrangement may thus be designed to perform automatic recognition of loudspeakers in a captured image. This automatic recognition may, together with the extracted environment properties, establish an estimation of the physical location of one or more loudspeakers detected in the image. The recognition may be aided by several different types of facilitators. Such a facilitator may thus be that the algorithms comprise image detection techniques wholly or supported by loudspeaker reference data. An instance of such an aid may e.g. include image data descriptions of possible of the loudspeaker systems.

An advantageous embodiment is obtained when the physical location is determined in a 2D model of the aggregated environment.

An environment may have many different logical definitions within the scope of the invention. One of such logical definitions may simply be that of referring a specific environment to a specific room or space.

An advantageous embodiment is obtained when the physical location is determined as a number of 2D models describing the aggregated environment.

The aggregated environment may advantageously be described by means of a number of environments e.g. enabling loudspeakers with respect to rooms.

An advantageous embodiment is obtained when the physical location is determined in a 3D model of the aggregated environment.

An advantageous embodiment is obtained when the physical location is determined as a number of 3D models describing the aggregated environment.

The aggregated environment may advantageously be described by means of a number of environments e.g. enabling loudspeakers with respect to rooms.

An advantageous embodiment is obtained when the aggregated environment is divided into at least two different zones which may be individually addressed by the bus driver of the system.

A zone may thus partition an environment, cover more environments, or overlap another zone. The zone in this context is a designator of one or more loudspeakers of the system enabling the central bus driver to address loudspeaker(s) of such individual zone.

An advantageous embodiment is obtained when a zone is defined with reference to said physical locations of one or more loudspeakers.

An advantageous embodiment is obtained when a physical location is defined as a zone.

The physical location can thus be determined and calculated more broadly as a zone. Such a zone could e.g. be a broad determination of the room in which the relevant speaker is mounted. Such a broader understanding of a physical location may thus be applied for the purpose of addressing the loudspeakers more on a zone basis while transmitting signal for audio reproduction.

Within the same framework, the identifier may designate the specific environment or a specific zone within the environment. An environment may comprise one or more zones or an environment may be designated to be one zone.

In this context, it should be noted that several environments in principle may be bundled into a zone, thereby making a zone designate multiple environments or at least more than one environment.

An advantageous embodiment is obtained when a central controller is arranged to control reproduction of audio signals in said loudspeaker system on the basis of said established physical locations.

An advantageous embodiment is obtained when a central controller is arranged to control reproduction of audio signals in said loudspeaker system on the basis of said location abstraction level database.

An advantageous embodiment is obtained when the physical locations are mapped into a location abstraction level database, the physical locations being associated to abstraction levels defined by a user at least during an initial setup of the system, thereby enabling a central controller to control reproduction of audio signals in one or more loudspeaker identified with reference to said location abstraction level database.

The setup procedure according to the present invention allows a user, such as a system designer or a technician to define a zone in intuitive terms, such as "Gate 1, "Gate 2", "Hall", "Lavatories", etc. Such setup, i.e. the association of a physically located loudspeaker to an intuitive and understandable terminology, makes it possible to address individual zones with audio provided by the bus driver under the control of the bus controller.

An advantageous embodiment is obtained when the location abstraction level database refers to or is integrated with the location database.

An advantageous embodiment is obtained when the loudspeaker system comprises a user interface facilitating addressing of two or more different groups of loudspeakers by selecting one or more abstraction levels in said abstraction level database.

The user interface made available through the provisions of several embodiments of the present invention makes it possible for an operator of the system to address loudspeakers or groups of loudspeakers based on intuitive and dynamic terms stored in the abstraction level database. The groups may also be redefined without undue requirement for redesign of the loudspeaker system as a consequence of refurbishment, modified store layouts, etc. The system may then simply be recalibrated by the use of a mobile device and the method provided by the present invention.

An advantageous embodiment is obtained when said physical location is automatically established by means of said mobile device and wherein the corresponding loudspeaker identifier is established by an automatic test routine run by the mobile device and the loudspeaker system.

An automated test routine in the present context is understood as an automatic application run on the mobile device where the central controller of a loudspeaker system triggers loudspeaker identification which may be automatically detected by the mobile device for the purpose of identifying the individual or groups of loudspeakers and then establish the relation between the physical location with the corresponding loudspeaker identifier. The automated detection may e.g. be based on that a central controller activates a diode "visible" by the camera of the mobile device. The camera of the mobile device captures an image of the loudspeaker and detects that the specific loudspeaker has been visually activated. The visual activation may e.g. be triggered by means of the mobile device by communication to the central controller of the loudspeaker system. Again, now the loudspeaker identification, defined or referred to by the central controller may be correlated with the physical location obtained on the basis of the extracted environment properties.

An automated test procedure may also involve the use of various audio assisted test procedures requiring more or less manual interaction during the setup phase. An automated test procedure may involve a communication between the mobile device and a central controller whereby audio test signals are reproduced by the system and captured by a microphone arrangement of the mobile device. The microphone equipment may be permanently included in the mobile device or it may be coupled to the mobile device. An example of an applicable automatic test routine may be a test routine reproducing audio over a single or a group of loudspeakers and where the mobile device by means of the computing processor arrangement processes signals obtained from a microphone connected to the mobile device and automatically determines whether the registered sound is produced by loudspeakers in the room in which the mobile device is located. In other words, a simple determination of which speakers are in which environments may be enough to make the system work properly subsequent to the setup phase.

A more advanced determination may also be possible where the audio equipment of the mobile device is advanced enough to provide a relatively high resolution and thereby locate the specific position in the room or the environment rather than just determining that the loudspeaker is in fact present in the room. A specific localization of the individual speakers may be attractive in particular when maintenance is needed, i.e. when an engineer needs to locate where to find a specific loudspeaker.

In an embodiment, the mobile device determines distances to the loudspeakers from an image, and receives relative distances between the loudspeakers from another source. Thereby the loudspeakers' relative positions, which may be determined from their relative distances, may be compared with the image information in order to rotate or relate the relative positions to match the image, whereby the relative positions become absolute, at least with respect to the environment in the image. Various inventive embodiments for determining relative distances between the loudspeakers and thereby determine their relative positions are described in co-pending patent application "Method for determining or verifying spatial relations in a loudspeaker system" by the same applicant, that patent application hereby incorporated by reference with respect to disclosure relating to determining distances and spatial relations or arrangements of the loudspeakers.

An advantageous embodiment is obtained when the mobile device is communicatively coupled to the central controller and wherein said physical location is automatically established by means of said mobile device and wherein the corresponding loudspeaker identifier is established by an automatic test routine run by the mobile device and the loudspeaker system.

An advantageous embodiment is obtained when said physical location is automatically established by means of said mobile device as extracted environment properties and wherein the corresponding loudspeaker identifier is established by a semi-automated test routine run by the mobile device and the loudspeaker system.

A semi-automated test routine may e.g. involve requirement for more intelligence in relation to the installation procedure where an engineer reads and inserts loudspeaker specific codes in connection with the system setup.

An advantageous embodiment is obtained when a loudspeaker identifier is obtained by said mobile device from a corresponding loudspeaker by acoustic, optical or radiofrequency wireless communication.

Preferably, the mobile device may be able to receive the loudspeaker identifier directly from the loudspeaker by means of acoustic or electromagnetic communication, for example ultrasound, bat chirps, audible sound with encoded identifiers, radio frequency communication e.g. by Bluetooth, ZigBee, WiFi, or other RF protocols, e.g. at the 2.4 GHz band, by near field communication, RFID tags, etc., by optical communication such as modulated light, simple modulated LED flashing schemes, infrared communication, etc. Smartphones, tablets and other massively deployed smart devices typically provides one or more of microphone and loudspeaker to receive and send acoustical signals, camera to receive optical signals, and various RF communication protocols and hardware, typically for WiFi and Bluetooth communication. Some also provide NFC communication, RFID tag readers, infrared sensors, etc. The communication between loudspeakers or nodes and mobile device may be two-way or either one way.

An advantageous embodiment is obtained when said corresponding loudspeaker identifier to be related to said physical location is determined by a test routine comprising one or more of:
- correlating distances between said mobile device and said loudspeakers determined from said environment properties and determined from acoustic or radio-based distance estimation, e.g. based on acoustic chirps;
- correlating first-to-arrive acoustic signals, e.g. chirps, from several simultaneously transmitting loudspeakers with a nearest physical loudspeaker location;
- correlating a loudspeaker node comprising a microphone which first received an acoustic signal with a physical location of the mobile device transmitting the acoustic signal, e.g. a chirp.

An advantageous embodiment is obtained when a plurality of said relations are established during an initial setup procedure when the system is installed and stored in said location database.

Generally, the present setup procedure is established as an initial setup after installation has taken place. It is of course possible to modify the established zones from time to time if new zones need to be added or need to be modified. This may in particular be the case due to the fact that the use loudspeaker are not logically bound by the bus layout, thereby making it possible, through the invention to add loudspeakers to an environment simply by mounting a further bus or attaching to an already existing bus layout. The dynamic provisions of establishing and registering the position of the individual speakers without requiring that the individual bus with attached speakers are defining the intended or required zone facilitate that loudspeaker buses may overlap zone or even environments without affecting the agility of the loudspeaker system.

An advantageous embodiment is obtained when the relations are modified subsequent to redesign of the system.

An advantageous embodiment is obtained when the relations are modified if the aggregated environment is expanded/changed.

An advantageous embodiment is obtained when the relations are modified if the zones of the environment need to be redefined.

In one aspect, the invention relates to a loudspeaker system comprising a plurality of loudspeakers configured for audio reproduction of audio signals under the control of a central controller, and wherein the central controller establishes audio reproduction of specific or groups of loudspeakers on the basis of a correlation between the physical location of loudspeakers of the loudspeaker system and corresponding loudspeaker identifiers and wherein the location of loudspeakers are established at least partly on the basis of the method for relating a physical location of a loudspeaker as described above.

In one aspect, the invention relates to a method of installing a loudspeaker system comprising a plurality of loudspeakers, the method comprising the steps of mounting the loudspeakers covering one or more environments of an aggregated environment and driven by a bus driver; defining a number of abstraction levels and storing these in an abstraction level database; initializing relations of a relations database; correlating the relations and the abstraction levels thereby obtaining a correlation between the abstractions levels and the physical locations of the loudspeakers determined by the relations of the relation database; and integrating the abstraction levels into a user interface thereby facilitating an operator to address loudspeakers of defined abstraction levels with audio via said bus driver.

An advantageous embodiment of the method of installing a loudspeaker system uses the method described above regarding determining said physical locations of the loudspeakers. The installation method may be combined with any of the embodiments and features described above thereby in embodiments providing the advantages described.

### The drawings

The invention will in the following be described with reference to the drawings where
- figure 1: illustrates a block diagram of a loudspeaker system according to a preferred embodiment of the invention,
- figure 2: illustrates an aggregated environment according to a preferred embodiment of the invention,
- figure 3 and figure 4: illustrates an aggregated environment, comprising environments, loudspeakers and zones,
- figure 5: illustrates a block diagram of a mobile device according to a preferred embodiment of the invention,
- figure 6: illustrates a mobile device, detecting a loudspeaker and relating that loudspeaker to a zone,
- figure 7: illustrates a flowchart describing one embodiment of relating a physical location of a loudspeaker to a loudspeaker identifier.
- figure 8: illustrates a loudspeaker system comprising a loudspeaker bus, a bus driver and several nodes, some of which are loudspeakers,
- figure 9: illustrates a bus driver for a loudspeaker bus,
- figure 10: illustrates a node of a loudspeaker bus,
- figure 11-13: illustrates a bus driver connected to a node in different network topologies,
- figure 14 and 15: illustrated impedance balancing in an extended daisy chain network, and
- figure 16: illustrates different audio system layouts and subset of nodes.

### Detailed description

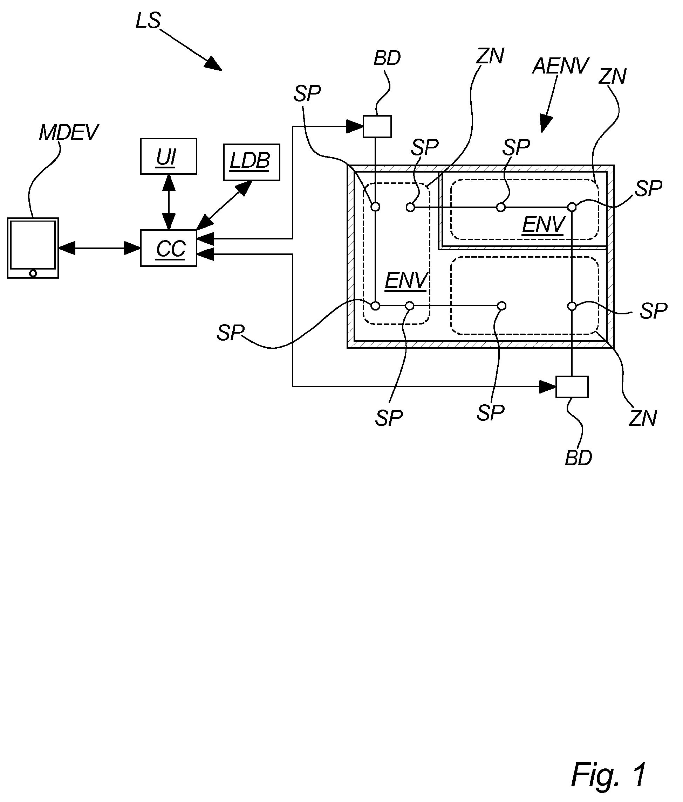

Figure 1 illustrates a block diagram of a loudspeaker system LS according to a preferred embodiment of the invention.

This embodiment comprises a mobile device MDEV, a central control CC, a user interface UI, an aggregated environment AENV, a location database LDB and a set of bus drivers BD. Further the system comprises a plurality of environments ENV, zones ZN and loudspeakers SP. The system manages audio reproduction to one or more loudspeakers SP based on the correlation between the physical location PL and loudspeaker identifier SPI.

In this embodiment the mobile device MDEV is utilized to correlate the physical location PL of a loudspeaker SP to a loudspeaker identifier SPI based on environment properties ENVP determined from images IM captured by a camera CM of the mobile device MDEV. The mobile device MDEV is communicatively coupled to the central control by a wireless communication such as audio, electromagnetic, optical more particular Wi-Fi, Bluetooth, Near Field Communication, infrared, ultrasonic or similar wireless communication forms; however, in another embodiment this communication link can also be wired.

This embodiment further comprises a user interface UI that is communicatively coupled to the central control. The user interface UI visualizes information such as the location of the loudspeakers SP, properties of the environments ENV and the zones ZN in the aggregated environment AENV. The user interface UI enables the user to view and change which loudspeakers SP are present in the individual zones ZN.

This embodiment further comprises a location database LDB also communicatively coupled to the central control CC. The location database LDB stores the relation REL between the physical locations PL of the loudspeakers SP and a loudspeakers identifier. In some embodiments this relation REL may be described by a lookup table or a pointer that links a physical location PL to a speaker identifier in the database. However, in another embodiment a similar method for storing the relation REL between two parameters may be used. The location database LDB further holds information about which zone ZN each loudspeaker SP is assigned to. Further an abstraction level database ALDB may also in another embodiment be integrated within the location database LDB. The abstraction level database ALDB stores an abstraction level AL of the zones ZN preferably defined by a user, i.e. the user may for example define zone ZN "1" as "Kitchen". The location database LDB can be integrated with the central control or the bus driver BD or the location database LDB may be stored at a decentral location in which case the location database LDB may be accessed through a public communication network e.g. the Internet.

The central control manages inputs from mobile device MDEV, user interface UI, location database LDB and the speakers in the aggregated environment AENV. The central control can forward information to e.g. the mobile device MDEV, user interface UI or location database LDB.

The central control manages reproduction of audio signals by one or more loudspeakers SP in the loudspeaker system LS, preferably by transmitting audio to one or more bus drivers BD that are communicatively coupled to a set of loudspeakers SP in the loudspeaker system LS through a loudspeaker bus. The loudspeakers SP are positioned in an aggregate environment AENV comprising a set of environments. It should be noted that the topology of the loudspeaker system LS in terms of electrical or communicative connections may often be quite unrelated to the topology of the environments. The aggregated environment AENV and environments ENV are explained in greater detail below. The central control can manage reproduction of audio signals by the loudspeakers SP, e.g. by transmission through a bus driver BD either integrated in the central controller CC or by a communication link to the central controller CC. Further the central controller CC can manage reproduction of audio signals in a zone ZN defined by the user. A zone ZN comprises a set of speakers that can be positioned across environments. In some embodiment where the central controller CC manages reproduction of audio in a zone, the central controller CC forwards the audio and the loudspeaker identifier SPI of all the loudspeakers SP associated to that particular zone ZN to the bus driver BD, which then distributes the audio accordingly.

In another embodiment the central control is distributed such that the bus driver BD and the loudspeaker system LS come from a third party. This distribution enables the system to be integrated with existing third party loudspeaker systems.

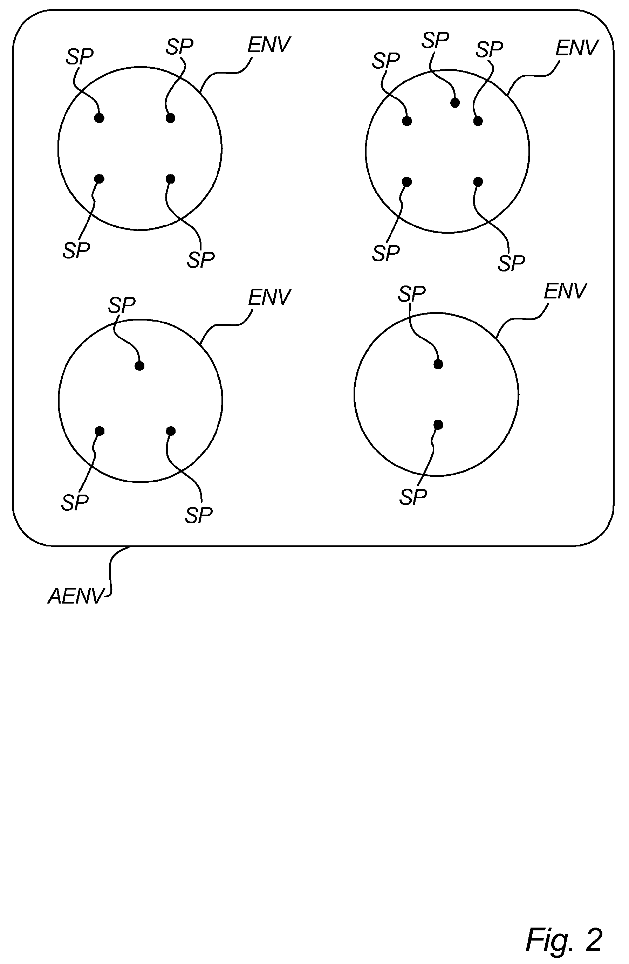

Figure 2 illustrates an aggregated environment AENV according to a preferred embodiment of the invention.

An aggregated environment AENV comprises a set of environments ENV each comprising one or more of the loudspeakers SP of the loudspeaker system LS. Each environment ENV comprises a physical area e.g. a hallway, a conference room, a restaurant or a similar physically delimited environment. In other words, the environments ENV are defined by physical structures serving as acoustical and/or visual obstacles such as walls, floors and ceilings, doors and windows, partitions, plants, curtains, or even relatively large distances of space. The aggregated environment AENV may thereby for example be an office building, restaurant building, etc., comprising a set of environments. The aggregated environment AENV is limited to the aggregation of environments ENV comprising loudspeakers SP of the loudspeaker system LS, and may thus be limited to a part of a building, floor, etc., and comprise a single environment ENV or several environments. The loudspeaker system LS may comprise loudspeakers SP installed in one or more environments.

The topology of the loudspeaker system LS in terms of electrical or communicative connections may often be quite unrelated to the topology of the environments.

Figure 2 illustrates an embodiment of an aggregated environment AENV comprising four environments. Each environment ENV comprises a set of speakers each having a unique physical position. The number of speakers in each environment ENV can vary depending on the size of the environment. However, in this embodiment at least one loudspeaker SP is present in each environment.

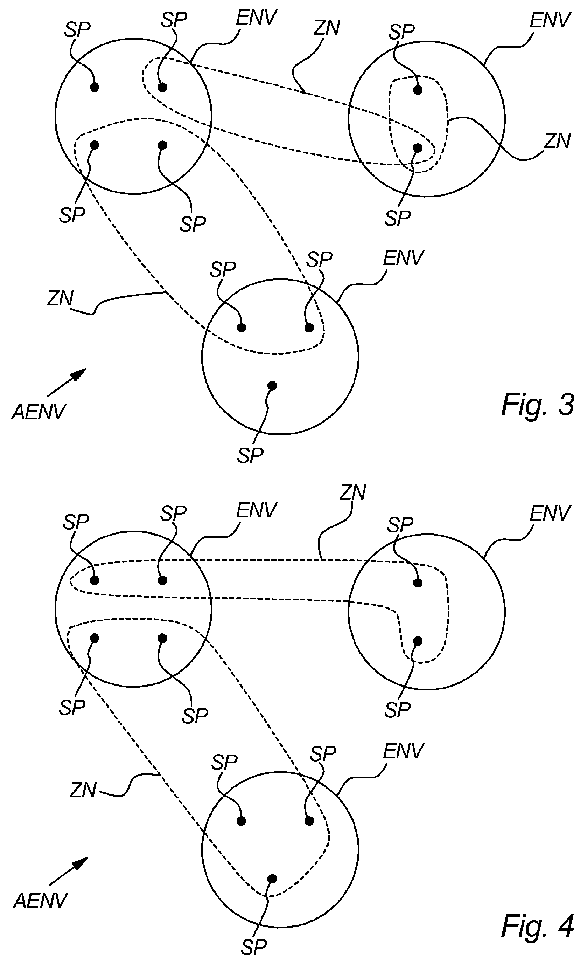

Figure 3 illustrates an aggregated environment AENV, comprising environments, loudspeakers SP and zones ZN.

This embodiment comprises a set of zones ZN and a set of environments ENV each comprising a plurality of loudspeakers SP.

An environment ENV comprises a physical area e.g. a hallway, a conference room, a restaurant or a similar physically delimited environment. In other words, the environments ENV are defined by physical structures serving as acoustical and/or visual obstacles such as walls, floors and ceilings, doors and windows, partitions, plants, curtains, or even relatively large distances of space.

A zone ZN can be determined by a selection of loudspeakers SP from an aggregated environment AENV not restricted to be within the same environment. The topology of the environments ENV may not necessarily correspond to the topology of the loudspeaker zones ZN. In other words, loudspeaker buses, environments ENV and loudspeaker zones ZN are non-constrained, but at least partly overlapping. The zones ZN can be modified, added and removed from time to time depending on the requirements of the loudspeakers SP.

In figure 3, the zones ZN are determined by a set of loudspeakers SP selected from different environments ENV and a zone ZN consisting of loudspeakers SP from only one environment. Further in this embodiment one of the loudspeakers SP is defined in two zones ZN. The topology of the zones ZN are stored in the location database LDB from where a user can access the information through a user interface UI and rearrange the zones ZN, for example as seen in figure 4.

In an advantageous embodiment the physical location PL of the loudspeakers SP can be associated to an abstraction level AL. The abstraction level AL comprises a text string describing a zone ZN e.g. "Kitchen", "Hallway", or "Lounge bar". Knowing the physical location PL of a group of loudspeakers SP on one or more busses these can be mapped to an abstraction level AL e.g. "Hallway". This mapping may facilitate the user of the loudspeaker system LS to send audio to a specific area without having to know about loudspeaker identifiers SPI, environment identifiers ENV, zone ZN numbers, etc.

The abstraction level AL is in some embodiment defined by the user and stored in an abstraction level database ALDB. However, in another embodiment the abstraction levels AL are predefined terms.

The abstraction level database ALDB holds the abstraction level AL relation REL to the physical location PL of the loudspeakers SP. This database refers to the location database LDB. In another embodiment the abstraction level database ALDB may be integrated with the location database LDB

In an advanced embodiment, the assigned zones ZN and/or abstraction levels AL may not be static or permanent, but may be changed according to the application of the room or hall. Applications such as "live concert", "conference", or "lounge bar" may require the loudspeakers SP to fulfill different roles.

In an advanced embodiment the loudspeakers SP may be installed without first having to configure them individually as belonging to one or more zones ZN and/or abstraction levels AL, and without the installer having to maintain a chart of the serial-number or ID of the individual loudspeakers SP while installing them. This information may be provided "post hoc" by the present invention.

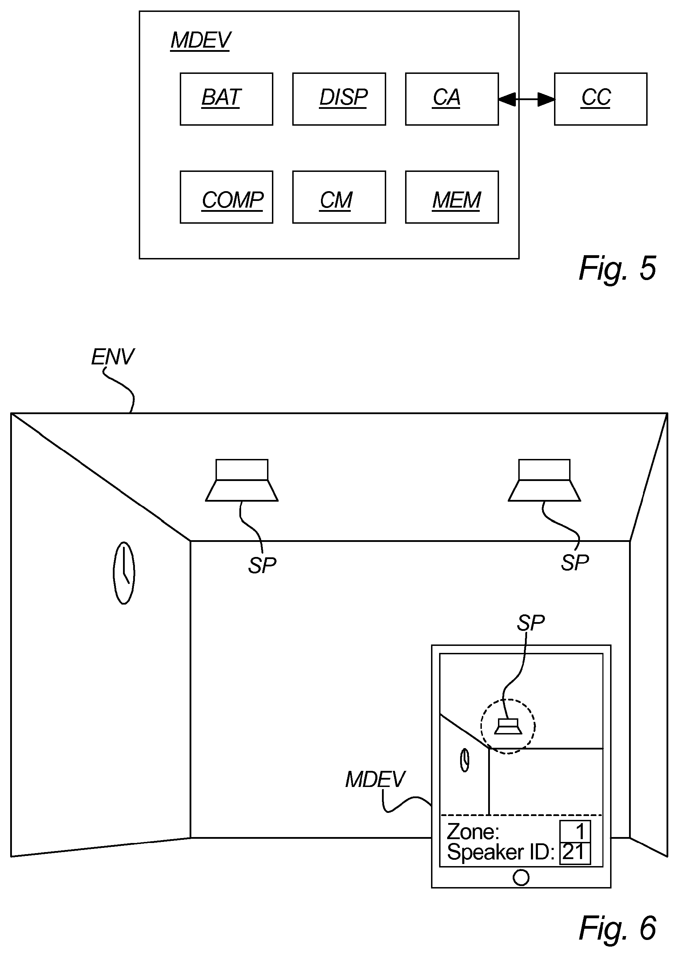

Figure 5 illustrates a block diagram of a mobile device MDEV according to a preferred embodiment of the invention.

The term mobile device MDEV should in this embodiment be understood as an electronic device such as smartphone, tablet, PDA, laptop or a similar device capable of capturing images IM, preferably by a built-in or accessory camera CM.

Figure 5 illustrates one embodiment of a mobile device MDEV in communication with a central control. The mobile device MDEV may comprise a battery BAT, a camera CM, a computing processing arrangement COMP, a communication arrangement CA, a memory arrangement MEM and a display DISP.

The mobile device MDEV may comprise one or more cameras CM for recording digital images IM. Further the camera CM can also be capable of capturing a video.

Images IM captured by the camera CM are displayed on the display DISP of the mobile device MDEV in real time. In a further embodiment the display DISP of the mobile device MDEV comprises a touchscreen functionality enabling a user of the mobile device MDEV to point out the location of a loudspeaker SP on the display DISP by touching the display DISP.

The memory arrangement MEM stores application software and augmented reality software in the form of readable instructions for the computer processor arrangement COMP. In one embodiment the memory arrangement MEM also comprise dimensions and position of the present environment ENV that the mobile device MDEV is located in.

The computer processor arrangement COMP allows the mobile device MDEV to execute computer readable instructions that are stored in the memory arrangement MEM.

As illustrated in figure 5 a communication link from the communication arrangement CA to a central control unit CC is established. This communication can be transferred through a wireless connection e.g. Wi-Fi, Bluetooth, Near Field Communication, infrared, ultrasonic or similar wireless communication forms or via a wired connection. In some embodiment the data transmitted through this channel comprise physical location PL of a loudspeaker SP and the zone ZN which the user has assigned the loudspeaker SP to. Further the data comprise environment properties ENVP captured by the mobile device MDEV.

In another embodiment the mobile device MDEV also comprises motion and/or orientation sensors e.g. compass, accelerometer or gyroscope, enabling the mobile device MDEV to provide motion and/or orientation information. In this embodiment the motion may include velocity and acceleration and the orientation may include Euler angles.

Figure 6 illustrates a mobile device MDEV, detecting a loudspeaker SP and relating that loudspeaker SP to a zone.

In this embodiment two loudspeakers SP are installed in the ceiling of an environment. However, in another embodiment the number of loudspeakers SP in an environment ENV can vary depending on the volume and coverage requirement for a particular environment.

The loudspeakers SP are communicatively coupled to a central control unit (not shown) through a communication topology e.g. bus, star, tree or a similar topology which is driven by a bus driver BD. The central control can transmit audio signals and/or initialization signals to each individual speaker via the network.

In an embodiment, initialization signals comprising a sound bite is played by a selected speaker. However, in other embodiments an initialization signal may be used as a trigger to turn on a light emitting diode (LED) embedded in the speaker. In yet another embodiment the initialization signal is simply one speaker in the network turned on at a time that plays an arbitrary audio signal.

The initialization signal can be used when setting up the loudspeaker system LS. An initialization signal played by a loudspeaker SP can be used to physically detect the loudspeaker's location by a user. This loudspeaker SP can then be related to a loudspeaker identifier SPI by utilizing a mobile device MDEV comprising object recognition software and environment properties ENVP.

Figure 6 further illustrates a mobile device MDEV in the form of a tablet, embedded with application software and augmented reality software. A camera CM of the mobile device MDEV is pointed in the direction of a loudspeaker SP. The image IM captured by the camera CM is analyzed by the computing processing arrangement executing the application software. In this embodiment the loudspeaker SP is automatically detected using image processing algorithms stored in the memory application. These algorithms may comprise feature detection, object detection, object recognition or similar algorithms suitable for recognizing objects in an image IM.

In another embodiment the detection of loudspeakers SP is done manually by the user selecting the loudspeaker SP either in the form of using a cursor on the screen or by selecting the location by selecting on the touchscreen of the mobile device MDEV or by a similar user interaction suitable for selecting the object on the mobile device MDEV.

In another embodiment the display DISP is provided with a fixed reference point, such that the user will point the mobile device MDEV in the direction of the loudspeaker SP in such a way that the fixed reference point is positioned on top of the loudspeaker SP when looking at the display DISP.

The selected or detected loudspeaker SP is visualized to the user by an image reference IMREF that is superimposed on the captured image IM displayed on the mobile device MDEV. In some embodiments, an image reference IMREF may include text description, a color overlay, a circular marker, a crosshair or any similar visual indicator of the object. In figure 2 this detection is illustrated by a dotted circle around the object.

In an advantageous embodiment the selected or detected position of a loudspeaker SP in the images IM is converted to a physical location PL by combining the extracting environment properties ENVP from the image IM with the selected or detected position of the loudspeaker SP.

In another embodiment the physical location PL is determined by correlating the sensory information of the mobile device MDEV from sensors e.g. compass, gyroscope, accelerometer, GPS or similar sensors capable of determining the orientation and location of the mobile device MDEV, with the environment properties ENVP of the room.

In another embodiment the physical location PL is determined by triangulating the position of the mobile device MDEV in an environment, by utilizing at least tree wireless broadcasters positioned at known locations in an environment ENV and correlating this with environment properties ENVP.

In another embodiment the physical location PL is determined by utilizing stereo vision, enabling the mobile device MDEV to acquire depth information of the captured image IM and correlating this information and correlating this with environment properties ENVP.

In another embodiment the physical location PL is determined by using a microphone array embedded in the mobile device MDEV. The microphone array can pinpoint a loudspeaker SP playing a specific soundbite e.g. broadcasting the ID of the loudspeaker SP using frequency shift keying. Detecting the direction of the audio source and correlating this with environment properties ENVP enables the detection of the physical position.

In another embodiment the physical location PL is determined correlating the visual distance between the mobile device MDEV and a loudspeaker as mentioned above with a signal distance. In this embodiment the signal distance can be obtained by letting a selected loudspeaker broadcast either a data signal or an acoustic signal. A data signal e.g. comprises a unique identifier that can be broadcasted using wireless communication embedded in the loudspeaker SP such as Bluetooth. An acoustic signal may e.g. comprise chirps that can be transmitted from the speaker itself. The mobile device MDEV determines the physical location PL of the loudspeaker SP by measuring the distance to the particular loudspeaker e.g. by knowing at what time the acoustic signal is transmitted or the received signal strength indicator (RSSI) from the data signal and correlate the distance with the visual distance measured and determines the physical location PL, if the two measured distances are substantially the same.

The physical location PL may be understood as 2D or 3D Cartesian coordinates in an environment ENV in a resolution sufficient to position the loudspeaker SP within a radius of one meters precision or less of its actual position. However, in some embodiments the physical location PL may be determined more loosely, e.g. by reference to a named room, etc.

The method for relating a loudspeaker identifier SPI and zones ZN to the physical location PL of the loudspeaker SP may be performed by the central control transmitting an initialization signal to a selected loudspeaker SP. The loudspeaker identifier SPI is further forwarded to the mobile device MDEV. When the user finds the loudspeaker SP broadcasting the initialization signal the user may direct the camera CM of the mobile device MDEV towards the transmitting loudspeaker SP. When successfully selecting or detecting the loudspeaker SP by the mobile device MDEV, the user assigns a zone ZN and an environment ENV to the speaker via an interface of the mobile device MDEV. This information is then forwarded to a location database LDB through the central control.

From the mobile device MDEV a user can categorize each loudspeaker SP into a particular zone ZN by a user selection within the application software of the mobile device MDEV. In figure 6 the zone ZN is indicated by a number. However, in another embodiment this could also comprise an abstraction level AL e.g. "Kitchen", "Hallway", "Bathroom" or similar text strings that defines a zone.

In this embodiment the mobile device MDEV is wirelessly connected to central control e.g. Wi-Fi, Bluetooth, Near Field Communication, infrared, ultrasonic or similar wireless communication forms, however in another embodiment the connection can also be established via cable in a network e.g. LAN or similar.

The central control can forward the loudspeaker ID SPI of the active speaker to the mobile device MDEV in the adjustment or setup phase of the system. However, in another embodiment the central control is controlled from the mobile device MDEV such that the user can select which loudspeaker ID SPI that the central control shall transmit the initialization signal to.

The relation REL between a loudspeaker SP and a loudspeaker identifier SPI is forwarded to the location database LDB that stores this information. In an advantageous embodiment the storage can be located on a decentral server, that is accessible through a public communication network e.g. Internet.

In some embodiments the mobile device MDEV may not always be able to access a communication network e.g. Wi-Fi or mobile network and may thus not always be able to communicate with the central control or the bus driver BD. Therefore, in an advantageous embodiment the mobile device MDEV can communicate to e.g. the bus driver BD via audio or light emission or similar close range communication methods, to a loudspeaker SP, which forwards the received information to the bus driver BD which in turn also can forward the data to the central control.

In one embodiment the communication link between mobile device MDEV and loudspeaker SP is established by means of light emission signals. Data communication from the loudspeaker SP to the mobile device MDEV is accomplished by using a digital signal processor embedded in the mobile device MDEV. The camera CM of the mobile device MDEV may capture images IM or video of emitting signals transmitted by a loudspeaker SP, LED and may covert the blinking of the LED to data information through image processing algorithms.

Data communication from the mobile device MDEV to the loudspeaker SP is established by using a light e.g. LED or a flash light, integrated in the mobile device MDEV where the loudspeaker SP receives these light signals through a photodiode which is then translated to data bits through a signal processor in the loudspeaker SP. In a preferred embodiment the bit rate of such a system may in one example be 10 bit/sec.

In another embodiment the direct communication between the mobile device MDEV and the loudspeaker SP is performed by both parts using frequency shift keying (FSK) when transmitting data to one another. For receiving of data each party has a microphone for receiving and a signal processor for translating the audio signal to a digital data. The duration of a sound burst may in a preferred embodiment be lower than 3ms such that reflections from walls, sealing, floor or the like will be distinguishable from audio coming directly from the source however, this duration can be altered depending on the properties of the environment. In another embodiment the communication could be performed by various coding schemes such as dual tone multi frequency (DTM) or similar schemes suitable for communication via audio.

The loudspeaker identifier SPI may comprise a 32 bit or 64 bit unique number. This number could in an aggregated environment AENV be reduced to 8 bit, by the bus driver BD through a reference table or similar stored in the bus driver BD. The reduced resolution lowers the communication time transmitted through. Further this reduces the power consumption of the mobile device MDEV.

Environment properties ENVP describe the characteristics of a room or other environment ENV such as its height, width, length or shape, which could be described by Cartesian coordinates e.g. x, y, z- coordinates. By knowing these properties, the mobile device MDEV may determine the position of an object when combined with information about the orientation of the viewer.

The environment properties ENVP define a virtual representation of an environment. Knowing the focal length, and similar properties of the camera CM capturing images IM of the room, can lead to determining the position of the camera CM in the room and any position of an object that is within the perspective of the camera CM.

In an advantageous embodiment the environment properties ENVP may be extracted by capturing images IM of the environment ENV using a camera CM on a mobile device MDEV and correlating the images IM with information about the environment ENV from e.g. a floor plan, a blueprint or similar, thereby making it possible in certain embodiments to estimate a position of an object in an environment ENV in two or three dimensions.

In some embodiments, the environment properties ENVP can be extracted based on sensory input such as measuring the distance to the surroundings from the users location via a distance measurer e.g. laser range scanner, ultrasonic distance measurements or similar methods suitable for measuring distance. These measurements may then be correlated with information about the room e.g. a floor plan, a blueprint or similar.

Augmented reality is commonly used for superimposing graphics, audio and other sensory enhancement on top of a real world environment ENV in real time. The basic architectural model of augmented reality comprises the following six subsystems: tracking, application, world model, presentation, context and interaction.

The tracking subsystem is responsible for responding to changes of the user's location and orientation among others. This information is used by other subsystems to present digital objects to the user in such a way that it looks as a part of the environment. For mobile devices MDEV this tracking is based on GPS, compass and accelerometer. Some mobile devices MDEV also use image recognition for a more precise positioning of objects.

The application subsystem is the main control of the program in e.g. mobile devices MDEV. This subsystem can communicate with server networks to retrieve information about objects that appear in the viewers' perspective.

The world model subsystem stores and provides access to a digital representation of a world, such as interest points and 3D objects and metadata. This is also referred to as "channels", "layers" or "worlds". The world model essentially consists of 3D geometry which is used to render a 3D scene and to determine the position of any markers e.g. for optical tracking.

The presentation subsystem provides output to the user such as a video stream and audio on a mobile device MDEV.

The context subsystem provides the application subsystem system with information about the user e.g. name, sitting down, in office etc.

The interaction subsystem is where the user can interact with the virtual word using hand gestures, virtual mouse or the like. The user can also press a simple 2D button on a touchscreen.

The advantage of using augmented reality when installing loudspeakers SP in a room is the possibility of using information about the user's location and viewing direction to determine the location of a loudspeaker SP in a room.

In order to determine the location of a loudspeaker SP in a room a user is equipped with a mobile device MDEV comprising tracking hardware such as GPS, camera CM, compass and accelerometer. Further the mobile device MDEV comprises augmented reality software that comprises the subsystems described above.

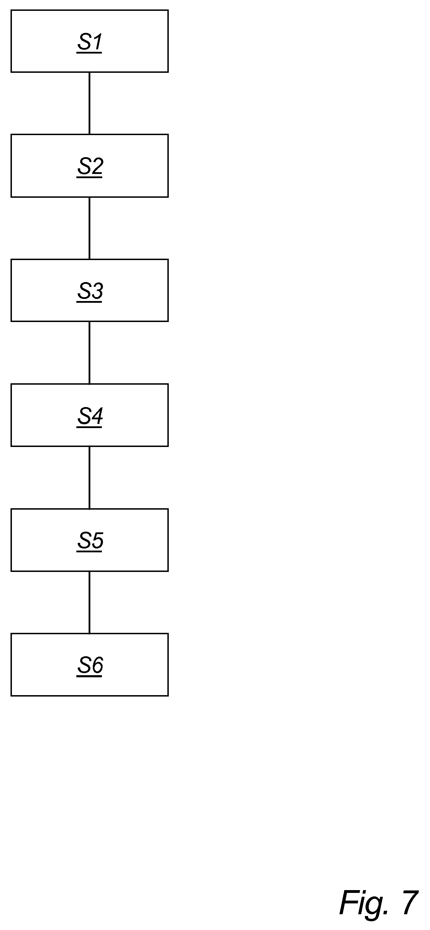

Figure 7 illustrates a flowchart describing one embodiment of relating a physical location PL of a loudspeaker SP to a loudspeaker identifier SPI by utilizing an automated test routine. In an advantageous embodiment the process in figure 7 may be performed by a mobile device MDEV, such as a tablet performing an automated test routine. The automated test routine is in one embodiment an automated application where the central controller CC transmits initialization signals to the loudspeakers SP for identifying the loudspeakers SP and for establishing a relation REL between the physical location PL and the loudspeaker identifier SPI.

In step S1 a number of speakers are installed in an aggregated environment AENV. The aggregated environment AENV comprises a set of environments, e.g. rooms, each comprising a set of installed speakers. Each loudspeaker SP is communicatively coupled to a loudspeaker bus that is controlled by at least one bus driver BD. The bus driver BD is communicatively coupled to the central control.

The one loudspeaker bus may be located in several different environments, and the environments ENV thereby do not correspond to the loudspeaker bus.

In step S2 of this embodiment the bus driver BD transmits an initialization signal to a selected loudspeaker. The loudspeakers SP in the aggregated environment AENV receive an initialization signal in a consecutive order from the central control.

In this embodiment the initialization signal is a soundbite that a user can hear. The order in which each loudspeaker SP is initialized can be done randomly, however in a preferred embodiment the user choses a loudspeaker SP detected on the loudspeaker bus, from the central control that shall receive the initialization signal.

In another embodiment the user can control the central control from a mobile device MDEV and thus select a loudspeaker identifier SPI from the mobile device MDEV.

In step S3 the physical location PL of the loudspeaker SP transmitting the initialization signal is located by the user walking into each environment ENV until the playing loudspeaker SP is found. In this step the initialization signal is a soundbite that the user can hear, and therefore the user can locate the selected loudspeaker SP by walking around in the aggregated environment AENV and listen to which speaker is playing. After locating the active speaker, the user will in a preferred embodiment position himself within a close visual range of the speaker.

In step S4 the user points the camera CM of a mobile device MDEV running the speaker detection application software at the loudspeaker SP. From the images IM captured by the camera CM, environment properties ENVP are extracted. Further the loudspeaker SP is detected automatically or manually and its physical location PL is calculated by the mobile device MDEV.

In this embodiment the environment properties ENVP are extracted by means of captured images IM. However, in another embodiment these properties can be extracted by means of laser range, acceleration, ultrasonic measurement or a similar method for measuring distance to objects in the environment.

The automatic detection may be performed by utilizing image processing algorithms e.g. object detection or object recognition algorithms correlated with environment properties ENVP. The manual detection may be performed by a user interaction e.g. pointing to the location on a touchscreen or positioning a cursor at the area of the image IM where the loudspeaker SP is positioned on the display DISP of the mobile device MDEV.

In step S5 the user assigns the physical location PL of the loudspeaker SP to an environment, and relates the loudspeaker SP to a zone ZN or abstraction level AL e.g. "Kitchen".

In the initialization phase the user may both select the appropriate environment ENV that the loudspeaker SP is placed in and assign the loudspeaker SP to a zone. When relating the loudspeaker SP to an environment ENV and a zone, the physical location PL can also be related to an abstraction level AL defined by the user. An abstraction level AL describes a zone ZN in an intuitive term that gives the user a better overview of what a zone ZN is covering i.e. a zone ZN may in one embodiment be defined by a number, while at the same time in an abstraction level AL is defined by a text string such as "Hallway".

In step S6 the user transmits the relation REL of the physical location PL of the loudspeaker SP and the zones ZN from the mobile device MDEV to a location database LDB that is connected to the central control.

In this embodiment the transmission of data is performed by a wireless communication. In another embodiment this could also be performed using a wired connection.

After this loudspeaker SP is set up the user can proceed to setup any remaining speakers in the aggregated environment AENV, in which case the user may return to step S2. If the environments ENV change, e.g. due to remodeling of rooms, the user can adjust the environmental and zone ZN information of the speakers by starting at step S2.

In an embodiment the mobile device comprises or has access to a three-dimensional model of the environment, e.g. pre-built or runtime generated by camera data, which when correlated with manual or automatic localization of the mobile device within the 3D model, enables using the model data to determine distances from the mobile device to real-world objects, for example loudspeakers. By comparing these model-based distances with distances to loudspeakers measured by e.g. acoustic signals generated by the loudspeakers, such as e.g. bat chirps (high-frequency, short sounds), or e.g. radiofrequency-based distance detection, e.g. by Bluetooth LE, together with transmission of their identifiers, it is possible to correlate a loudspeaker illustrated on the display with the corresponding physical loudspeaker and a node identifier. If several nodes appear to have corresponding distances by the model-based and/or the signal-based distance determination, unambiguous distances and correlations may be obtained by moving the mobile device around in the environment. The model-based distances may be determined to a point in the model which a user points at on a display, or by performing pattern recognition to discover loudspeakers in the camera-based model and determining model-based estimated distances to them automatically. The acoustic-based distance may e.g. be measured by the mobile device causing its speaker to generate chirps including an identifier of a node. When a node recognizes its own identifier from the chirps it responds by chirping. Alternatively, the mobile device is communicating with the nodes directly or via the central controller by any suitable means as mentioned elsewhere herein, and may thus request a particular node to transmit a chirp or other acoustic signal. If in sync regarding time, the mobile device may calculate the distance from the time of arrival of the chirp at the microphone of the mobile device. In an embodiment, one node is requested by the central controller or by the mobile device, possibly via the central controller, to transmit chirps or other acoustic signal repeatedly while the mobile device is moved around. Upon recognition and correlation between the acoustically measured distance and a distance determined from the, preferably camera-based, environment model in the mobile device, a match between node identifier and physical location is stored, and the next node starts chirping. The correlation may be automatically confirmed, or may require user confirmation before proceeding. In an embodiment the mobile device with a, preferably camera-based, environment model and localization is moved near a node, and all nodes in the system are requested to chirp their identifier simultaneously. The first chirped identifier that reaches the mobile device identifies the nearest node, due to shortest distance for the acoustic waves to travel. Alternatively, the mobile device may transmit a chirp, while all nodes listen by means of microphones. The first node detecting the chirp is nearest to the mobile device.

In various embodiments described herein where the mobile device MDEV receives or detects a loudspeaker identifier SPI, various methods of conveying the identifier information from the loudspeaker or loudspeaker bus node to the mobile device may be employed. In various embodiments the mobile device may communicate with loudspeakers through the central device and/or the bus driver. In other embodiments, the mobile device and the loudspeakers or nodes may be connected to a common network, e.g. a LAN, WLAN, ad-hoc network, etc. More preferably, the mobile device may be able to receive the loudspeaker identifier directly from the loudspeaker by means of acoustic or electromagnetic communication, for example ultrasound, bat chirps, audible sound with encoded identifiers, radio frequency communication e.g. by Bluetooth, ZigBee, WiFi, or other RF protocols, e.g. at the 2.4 GHz band, by near field communication, RFID tags, etc., by optical communication such as modulated light, simple modulated LED flashing schemes, infrared communication, etc. The communication between loudspeakers or nodes and mobile device may be two-way or either one way.

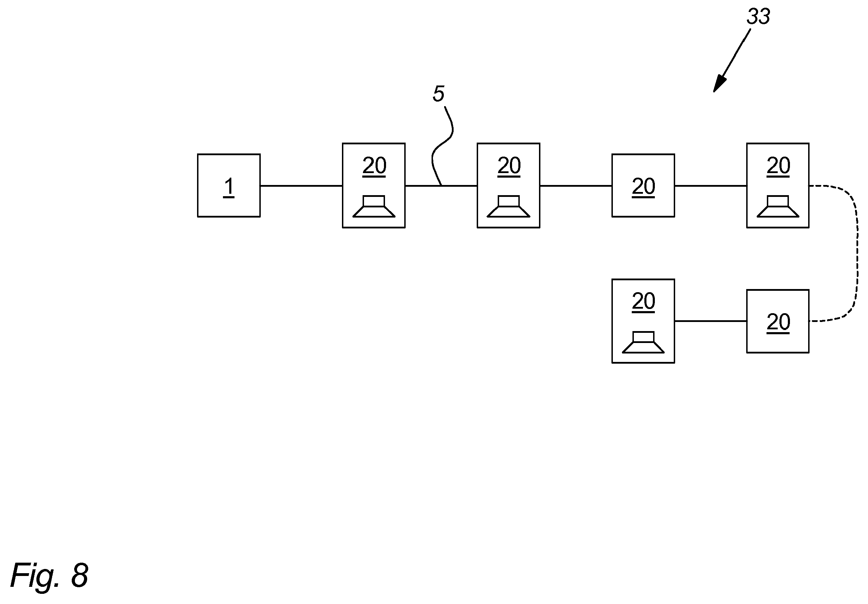

An exemplary embodiment of a loudspeaker system LS is illustrated by the figures 8-16 and are described in further detail below. In this part of the description a loudspeaker SP is referred to as node 20, the loudspeaker bus is referred to as a powered audio bus 5, a central controller CC is referred to as an external controller 10 and a bus driver BD is referred to as bus driver 1.

Figure 8 illustrates an audio system 33 according to an embodiment of the invention. The audio system 33 comprises a powered audio bus 5. A bus driver 1 provides control data, audio and preferably power to the powered audio bus 5. A number of nodes 20 are daisy-chained to the powered audio bus. Preferably at least a number of the nodes 20 comprises loudspeakers, for example a built-in active loudspeaker, an output stage with a loudspeaker output for connecting an external passive loudspeaker, or a line-out or equivalent for connecting an external active loudspeaker.

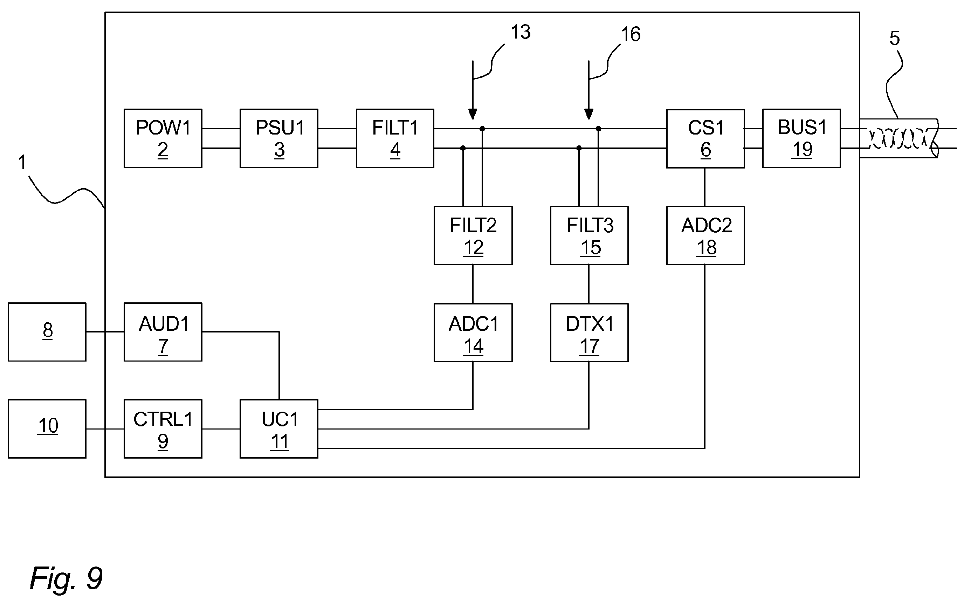

Figure 9 illustrates a bus driver 1 of the audio system 33 in more detail according to an embodiment of the invention. The bus driver 1 is preferably supplied with power from a driver power supply 2. This power supply may e.g. be connected to 110/230VAC mains, or comprise a DC source or any other electrical power source. Further, the bus driver 1 preferably comprises a driver power converter 3 which converts the incoming power to a DC voltage that supplies nodes 20 of the audio system 33.

Together the driver power supply 2 and the driver power converter 3 supply all electronics of the bus driver 1 and nodes 20 with suitable working voltages and may be referred to as bus power supply. The components of the bus power supply may be implemented in the bus driver 1 or may be external to the bus driver 1 and coupled directly to the powered audio bus 5.

The DC voltage is preferably below 50V and preferably between 40V and 50V. Preferably 48V is provided to the nodes 20 via the powered audio bus 5. The DC voltage should be balanced between low losses in the powered audio bus 5 (high DC voltage limits power loss) and secure or non-hazardous data transmission (low DC voltage facilitates avoiding conduits and compliance with safety requirements). Hence communication between the bus driver 1 and the nodes 20 therefore both comprise a supply voltage powering the nodes 20 and an audio signal for broadcasting via the nodes 20.

It should be mentioned that the capacity of the power supply 2 may vary from e.g. around 50W to over 1000W depending on the size and requirements to the audio system 33. Further, if considered necessary, an external (to the bus driver 1) power supply also referred to as injection power supply may be connected to the powered audio bus 5. The power is used at the nodes 20 for supplying local amplifiers, data processors, etc.

Power injectors for supplying additional power to the powered audio bus may preferably also be implemented as nodes and receive control data from the bus driver, for example in preferred embodiments to be shut off or disconnected during a node enumeration process to not disturb current measurements. The power injectors may for example use principles from the power over Ethernet (PoE) technology to inject power. Power injectors may provide power from mains, a battery or the like.

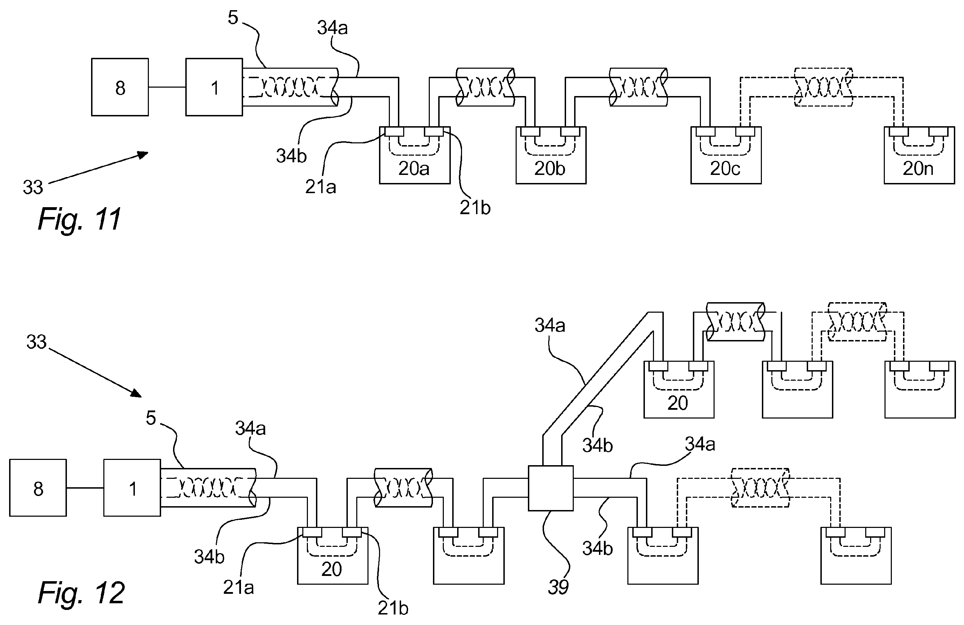

Preferably the bus driver 1 further comprises a first driver filter 4, which decouples the driver power supply 2 from the powered audio bus 5 (the preferably two conductors hereof denoted 34a, 34b of figures 11-13) with regards to alternating current. The first driver filter 4 may be implemented using power inductors, preferably with an inductance above 10uH for all operating currents.

Preferably the bus driver 1 further comprises a driver current sensor 6. This current sensor 6 is optional and if implemented, the current sensor 6 facilitates measurement of the current consumption on the powered audio bus 5 downstream from the bus driver 1. In addition, the driver current sensor 6 may act as a powered audio bus voltage monitor.

Preferably the bus driver 1 further comprises a driver audio interface 7, which acts as interface towards audio signal(s) between the bus driver 1 and an external audio source 8. Audio in this context may be analog (balanced or unbalanced electrical signal) or digital audio sent from the audio source 8 via WiFi, Bluetooth, Ethernet, USB, SPDIF, AES/EBU, ADAT, TOSLINK or through any other suitable digital protocol. Hence when referring to audio throughout this document a reference is made to a data signal which may comprise other information beside audio such as simple data, video, etc. to be exchanged between the bus driver 1 and the nodes 20.

Preferably the bus driver 1 further comprises a driver interface unit 9, which acts as interface towards control/information/status signal(s) between the bus driver 1 and external controller(s) 10. These signals may be sent through WiFi, Bluetooth, Ethernet, USB, RS232, RS485, or through any other suitable mechanism.

The bus driver 1 may include an internal audio source (not illustrated) or be connected to an external audio source 8 as described above. An external audio source 8 may be located as part of a LAN (LAN: Local Area Network) or the internet. It may be accessed remotely from the bus driver 1 e.g. via a wireless / wired LAN or the internet. The audio source 8 could be any audio player such as a portable device such as a tablet, smartphone, laptop etc. or it could be part of a larger setup for audio production and / or audio distribution such as a stationary media player, computer, data storage, radio, matrix unit, audio power amplifiers or the like. The audio source 8 could also be a "music player" inside the driver, like e.g. a radio receiver or a streaming media receiver, which receives digital audio from the internet.

The type of audio source 8 could be any source relevant for the application where the audio system 33 is in use and is therefore not important to the present invention. The present invention focus on the distribution of the audio signal and not on the source or type of the particular audio signal. Therefore, the driver audio interface 7 is not specified further in that different audio source 8 (if not part of the bus driver 1) could be connected to the bus driver 1 by various types of optical, wired or wireless audio and video connectors such as e.g. different types and sizes of jacks, plugs, connectors, screw / screw-less wire connections or the like, and the audio signals could be of various relevant analog or digital audio formats, encodings, compressions, container formats, etc.

The driver audio interface 7 and the driver interface unit 9 are preferably also used as interface to other audio systems, bus drivers 1, internet etc. In this way the audio broadcasted by the nodes 20 connected to the bus driver 1 can be coordinated with other bus drivers 1 of the same or other audio systems 33. It is thereby also possible to connect the audio system 33 to other systems such as home automation systems and provide information gathered from the nodes 20 or from the bus driver 1 to such system or retrieve information from such systems for use in the audio system 33.

The internet connection for the bus driver 1 also facilitates remote control and monitoring of the audio system 33 as such and of the individual elements hereof such as the nodes 20. This means that the health of a node 20 can be remotely monitored, faults can be located which facilitates faster maintenance or replacement, data from several audio systems 33 can be logged and used for statistics and future improvements, etc.

It should be mentioned that preferably, the audio source 8 is possible to reach from a not illustrated control interface. Such control interface may be used for selecting the particular audio from the audio source 8 to be broadcasted via the nodes 20, the quality, sound level, audio channel, etc. An example of a control interface could be an app installed on a mobile device such as a tablet or smartphone, or it could for example be implemented in the bus driver 1 or external audio source 8.

The fact that the audio system 33 facilitates remote or automatically enabled individual level control of the loudspeaker 32 of the nodes 20 has several advantages.

First this enables that a given sound profile in a single zone of nodes 20 can be changed dynamically without the need for mechanically adjusting e.g. a rotary switch on each individual node 20 or loudspeaker 32. This enables that a first node of a zone has a first sound level and a second node has another higher or lower sound level, hence, the sound level of the node at the bar or the restaurant is higher than the sound level of the node at the toilet, even though the nodes are of the same zone playing the same music. This will be an advantage in zones where playback level requirements change over a daily rhythm, like in bars and restaurants. A second feature with this ability is that mix-minus can be implemented. Mix-minus is a technique where the audio level in the proximity of a person speaking in a microphone, is reduced so that the person does not hear his/her own voice at an amplified level. This feature increases the "naturalness" when using microphones. When several microphones exist within a single zone (e.g. in a conference room), it is required that the individual loudspeaker 32 can reduce its sound level as a function of which microphone is activated.

In addition, status information of the node 20 may also be measured and transmitted to the bus driver 1. Status information could e.g. be temperature, power consumption, loudspeaker impedance, etc.

Preferably the bus driver 1 further comprises a driver processing unit 11 which may be considered the main data processor of the bus driver 1 and as such of the entire audio system. The driver processing unit 11 gathers data and control/information signals and makes decisions about signal routing, nodes 20 operation etc. Hence the purpose of coordinating and controlling signals and data processing of the bus driver 1 is controlled by the driver processing unit 11. This may include defining quality of the audio signal, framing the manipulation made by the data processors, determining when and which audio signal should be transmitted from the bus driver 1, processing data received by the bus driver 1 and taking appropriate actions, calibration and set-up of nodes 20, etc.

The bus driver preferably facilitates two communication channels between the bus driver 1 and the nodes 20, but may in various embodiments only facilitate one, or more than two. An advantage of facilitating two communication channels may be to ensure some degree of communication even when circumstances make one of the communication channels unusable. Therefore the two communication channels are preferably designed according to quite different technologies with different shortcomings and advantages. In an embodiment, a first communication channel may for example allow for robust communication with a simple encoding at relatively low frequencies, but inherently slow, whereas a second communication channel may for example allow for high-frequency, high-data-bandwidth advanced communication, but relatively sensitive to any irregularities.

For the above-mentioned first communication channel, the bus driver 1 may for example comprise a second driver filter 12 and a first driver analog-to-digital converter 14. The second driver filter 12 facilitates attenuation and filtering of signals and noise received via the bus 5 which does not belong to the first communication channel, and it preferably decouples the DC power of the bus from the processing of the first communication channel by means of for example capacitors.

In a preferred embodiment, the first communication channel signal passing through the second driver filter 12 from the nodes 20 is an FSK (FSK: Frequency-Shift Keying) signal with a relatively low carrier frequency, in particular preferably well below the frequency contents of the second communication channel which preferably works at frequencies far above the human audible frequency range. An example of a suitable FSK modulation scheme for this application may be a binary FSK modulation using the frequencies 8kHz and 12kHz, where the second driver filter 12 may be a band-pass filter allowing signal to pass in that frequency region. The typical attainable bit-rate using such a mechanism for communicating on a bus 5 is in the range of a few kbit/sec. The method for communication is mainly determined by the desired amount of the information to be sent and the bandwidth of the powered audio bus 5, hardware at the node 20 / bus driver 1 facilitating data transmission (hardware here is any kind of data processor) and would in most cases be slow compared to the audio signal transmitted from the bus driver 1 to the nodes 20.

The first driver analog-to-digital converter 14 facilitates translation of the analog modulated communication signal (carrying digital data) of the first communication channel from the nodes 20 of the powered audio bus 5 to a digital (quantized in both amplitude and time) representation. In some cases, it would be advantageous to establish two-way-communication through this first communication channel 13. In case of such bilateral communication between bus driver 1 and nodes 20, the first driver analog-to-digital converter 14 may also comprise a digital-to-analog converter that translate a digital signal from the driver processing unit 11 into a time/amplitude continuous representation and pass that signal through the second driver filter 12. In the latter case a function in the digital-to-analog converter allows the digital-to-analog converter to adopt a hi-z mode when the first driver analog-to-digital converter 14 is receiving information from one or more nodes 20 on the powered audio bus 5. Preferably the driver processing unit 11 is arranged to process the, for example, FSK signal received through the first communication channel, and/or to generate, e.g., FSK signals for transmitting to the nodes 20 via the first communication channel.

For the above-mentioned second communication channel, the bus driver 1 may for example comprise a third driver filter 15 and a driver digital transmitter 17. The primary function of the third driver filter 15 is to decouple the DC power of the bus from the processing units of the second communication channel by means of for example capacitors, but it may also facilitate attenuation and filtering of signals and noise on the bus 5 which does not belong to the second communication channel.

At least the DC component from the powered audio bus 5 should be attenuated and preferably removed entirely. In a preferred embodiment, the second communication channel signal passing through third driver filter 15 may be a binary data signal holding audio related data and (optional) control data from the driver processing unit 11 to a node 20. One such binary data stream may comply with the AES3 (also known as AES/EBU) protocol having a typical rate at 44.1 kHz or 48kHz, holding two 24 bit channels. Other rates and/or protocols may also be used, however, the AES3 protocol has proven its worth over the last couple of decades as being a very robust audio transport protocol. As a part of this standardized protocol are "user data" and "channel status" bits. For this application, these may be used as means for controlling nodes 20.

Preferably as part of the second communication channel, the bus driver 1 further comprises a driver digital transmitter 17 facilitating conversion of a digital data stream from the driver processing unit 11 to a differential electrical signal, which may be passed through the third driver filter 15 to the powered audio bus 5. In a preferred implementation, the electrical signal complies with the RS-422 or the RS-485, which are robust standardized protocols for transporting digital data over long distances and in noisy environments. These standards have been the preferred choice in many industrial automation systems for several decades. Optionally, the driver digital transmitter 17 also comprises a digital receiver (not illustrated), such that bi-directional data streaming (half duplex) can be obtained between the driver 1 and the nodes 20. When receiving data, the driver digital transmitter 17 adopts a hi-z state which is typically a built in feature in most RS-485 transceiver integrated circuits.

Such digital receiver may be connected in parallel with the driver transmitter 17 and is preferably AC coupled to the powered audio bus 5.

When the audio signal from the audio source 8 has been processed by the bus driver 1 to comply with requirements e.g. to the quality of the signal, this signal is transmitted to the network of nodes 20 via the powered audio bus 5. The choice of digital audio transport is advantageous in that it is free for disturbances like cross-talk issues and hum (50/60Hz) artifacts and facilitates a plurality of parallel bi-directional information on the transmission conductors 34a, 34b of the powered audio bus 5 between bus driver 1 and nodes 20 such as a plurality of simultaneous audio channels along with communication of control data.

The audio / data transmission (simply referred to as audio transmission or data transmission) is preferably of a type facilitating data transmission effectively over long distances (e.g. up to a few hundred meters) and in electrically noisy environments as well as facilitating connection of multiple nodes 20 to the powered audio bus 5. Data transmission can be done in a very robust way by transmitting signals differential i.e. with information hided in the difference between two conductors.

In a preferred embodiment, the audio transmission is complying with the TIA-485 standard (formerly known as RS-485 standard), an electrical digital layer which is very robust and reliable, but other standards could also be used. Hence the digitally encoded audio information is preferably superimposed on a DC supply voltage and communicated over the powered audio bus 5. The nodes 20 then comprise an audio decoder / node processing unit 23 that reconstructs the audio signal into a format suitable for input to the node power amplifier 31 (also referred to simply as node amplifier) or directly for input to the loudspeaker 32 which then produces the final audible speech, music, tones, etc.

In an embodiment, the bus driver 1 further comprises a second driver analog-to-digital converter 18 that allows the driver processing unit 11 to read current and voltage on the powered audio bus 5. This information can be used to detect powered audio bus fail and to help in automatically establishing a map over the bus network e.g. information of nodes 20 located on the powered audio bus 5.

The bus driver 1 may be connected at least to a main power supply or battery, analog audio (balanced or unbalanced), digital audio (electrical or optical) SPDIF, TOSlink, AES/EBU, ADAT, etc., network such as Ethernet, internet, RS232, CAN, etc., WiFi, Bluetooth, etc. Further, it should be mentioned that the bus driver 1 may have a user interface with buttons, (touch) display, LEDs, etc.

Preferably the bus driver 1 further comprises a driver-bus interface 19 facilitating the connection between the bus driver 1 and the powered audio bus 5 with its nodes 20. This connection may comprise EMI (EMI: Electro-Magnetic Interference) components that reduce electromagnetic interference from/to the bus driver 1. Such components may be capacitors, resistors, inductors, transient absorbing devices, and any other parts that improve the compatibility to/from the surroundings. The driver-bus interface 19 may also comprise a physical connector, which preferably is a so-called Phoenix connector, i.e. the typical loudspeaker connector used for professional fixed installations.

As mentioned, the bus driver 1 includes one or more data processors including controller units, analog-to-digital and digital-to-analog converters, filters, transmitters and receivers, interfaces etc. Hence when the audio / data signal (simply referred to as audio signal or data signal) is an analog signal, it is converted to a digital representation of the analog signal in a desired quality. Likewise if the audio signal is a digital signal, it is converted to an analog representation hereof in a desired quality. To obtain a desired quality of the audio signal, the data processors may perform mathematical manipulation of the audio signal such as filtering, compressing / decompressing, etc. the audio signal.

According to an embodiment of the invention, the bus driver 1 facilitates both transmitting and receiving of audio / digital signals to and from the nodes 20. Hence in situations where the nodes 20 are intelligent in the sense of being able to communicate to the bus driver 1 either based on own motion or as a reply to a query from the bus driver 1, the data processors may receive and process such communication. This processing may include converting such bidirectional communication between bus driver 1 and node 20 from a digital signal to an analog signal or vice versa. Further, extraction of information sent from the nodes 20 may also be necessary and be performed by one of the above mentioned data processors.

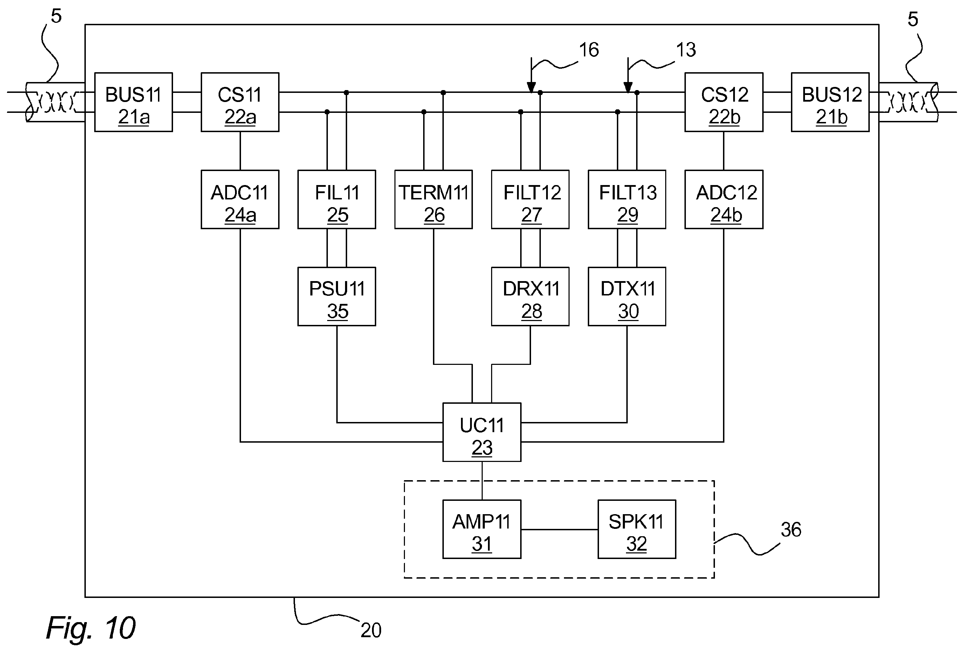

Figure 10 illustrates a preferred embodiment of the node 20 according to the invention. Preferably the node 20 comprises two node-bus interfaces 21 (21a first node-bus interface, 21b second node-bus interface) facilitating the connection of the node 20 to the powered audio bus 5. This connection may comprise EMI components that reduces electromagnetic interference from/to the bus driver 1. Such components may be capacitors, resistors, inductors, transient absorbing devices, and any other parts that improve the compatibility to/from the surroundings. The node-bus interfaces 21 may also comprise a physical connector, preferably a so-called Phoenix connector.

To ease the installation process and to minimize the risk of errors made during installation, the person mounting the bus driver 1 and nodes 20 to the powered audio bus 5 may freely connect either first node-bus interface 21a or second node-bus interface 21b to the upstream end of the powered audio bus 5 cable, meaning that the signal flow in the node 20 (from first to second node-bus interface) may be in either leftwards or rightwards direction. Further, the user is allowed to connect the preferably two conductors of the powered audio bus 5 cable to any of the terminals found in the node-bus interface 21 a, 21b, meaning that the polarity of the part of the powered audio bus inside the node 20 (conductors between first and second node current sensor 22a, 22b) may be either positive or negative. Again, this is advantageous in that it helps to ease the installation process and to minimize errors made in that process.

Preferably the node 20 further comprises a first node current sensor 22a and a second current sensor 22b, which are arranged so that the nodes 20 own current consumption can be distinguished from any downstream current consumption - regardless of both voltage polarity and signal (preferably a DC current) direction.

It should be mentioned that the first and second current sensors 22a, 22b may further comprise means for sensing the bus voltage level. Other suitable sensor structures may be used as long as the node processing unit 23 is able to obtain at least the downstream current consumption. The current sensors 22 may be implemented using Hall sensors, inductive based sensors, current to voltage conversion using a resistor having low resistance, or any other suitable mechanism.

Ideally, the current sensors 22 does not cause any signal changes from node input to output, such that signals at the node-bus interfaces 21 are identical, meaning that they are fully transparent in both directions.

Several circuits may establish a current estimate, which is able to estimate current regardless of its polarity and current flow direction, preferably the current sensors 22 are implemented as resistors referring to zero (ground potential). Having two (identical) current sense circuits and the knowledge of bus polarity allow the slave to choose to take the current information from the current sense circuit that is connected to the ground potential. Current is preferably sensed across two resistors. This makes the node able to distinguish between its own current consumption and the downstream consumption.

Accordingly, the current sensors 22 together with e.g. the node processing unit 23 and other not mentioned components may be referred to as a bus power monitoring unit.

Preferably the node 20 further comprises a first and second node analog-to-digital converter 24a, 24b that allow the node processing unit 23 to read current and voltage on the bus, sensed as described above.

Preferably the node 20 further comprises a first node filter 25 facilitating blocking of AC currents. The purpose of the first node filter 25 is to extract DC current for powering the node 20. This first node filter 25 may be implemented using inductors having a relatively large inductance, preferably above 100uH. This is because when looking at larger audio systems comprising several nodes 20, several of these first node filters 25 will be mounted in a parallel on the powered audio bus 5.

Preferably the node 20 further comprises a node power supply 35, also simply referred to as power converter.

The DC supply voltage from the bus driver 1 is converted at the node 20 to a voltage level of e.g. between 1V and 12V for supplying one or more data processors and other power consuming components of the node 20.

To make sure that high frequency components of the digital audio signal of the powered audio bus 5 are not "short circuited", e.g. an inductor may be implemented between the powered audio bus 5 and the components of the node 20.

Preferably the node 20 further comprises a transmission line termination unit 26, that ideally inserts an impedance if the node is at one end of the powered audio bus 5 (preferably the farthest or the last node 20 in a series of nodes 20 on the powered audio bus 5) to eliminate transmission line reflections. The node may determine itself whether it is at the end of the powered audio bus, or, preferably, the bus driver instructs the appropriate node to insert its transmission line impedance. The transmission line termination unit 26 is controlled from the node processing unit 23, which can insert a transmission line termination impedance using a relay, transistor, MOSFET or by any other suitable means. In a preferred embodiment, the transmission line termination impedance is a resistor in series with a capacitor.

It should be mentioned that the powered audio bus 5 should be terminated in both ends. At the bus driver 1 end of the powered audio bus 5, the output impedance is known e.g. from the driver digital transmitter 17.

Preferably the node 20 further comprises a second node filter 27 that attenuates signals components not of interest for passing the digital audio and control streaming data. At least the DC component is attenuated or preferably entirely removed. Such AC coupling may be implemented using capacitors and resistors.

Preferably the node 20 further comprises a node receiver, preferably a node digital receiver 28 that receives the digital audio signal (preferably via the second communication channel 16) outputted from the controller digital transmitter 17 of the bus driver 1, and passes this signal on to the node processing unit 23. The node digital receiver 28 may also (optionally) include a digital transmitter and may be implemented using a RS-485 receiver/transceiver.

Preferably the node 20 further comprises a third node filter 29 for the first communication channel that attenuates signals components not of interest for passing the control/information/status data. In a preferred embodiment, the data is encoded using frequency shift keying FSK at a carrier frequency that do not disturb the digital streaming data sent through the second communication channel 16 - as described above. The third node filter 29 may be implemented inductors, capacitors and resistors.

Preferably the node 20 further comprises a node transmitter 30 facilitating outputting a modulated version of the status data sent from the node processing unit 23 to the bus driver 1. In a preferred embodiment, this may be done by using frequency shift keying FSK, in that FSK may be robust even though the farthest node 20 is not terminated yet. In this way the node 20 can be identified e.g. by means of an identifier send from the node 20 to the bus driver 1. The node transmitter 30 may be implemented by using simple buffers from the 74HC logic family (outputting squarewave signals) or by using a digital-to-analog converter. Output of the node transmitter 30 is ideally tri-stated when not sending data. Optionally the node transmitter 30 may be implemented in a bidirectional fashion, similar to the first controller analog-to-digital converter 14 of the bus driver 1.

Preferably the node 20 further comprises a node processing unit 23 acting as the main data processor of a given node 20. It receives (from the node digital receiver 28 or from any other audio sources, not illustrated), process, and outputs audio signal to a node amplifier 31 or any other audio output channels (not illustrated). Further, the node processing unit 23 receives control signals at least from either the node digital receiver 28 and/or from the node transmitter 30. These control signals are interpreted and suitable actions are carried out on basis of the control requests. The node processing unit 23 is also an important part of the "end-of-cable" identification process and the node enumeration process of the illustrated embodiment.

Preferably the node 20 further comprises a node power amplifier 31 that drives one or more loudspeakers 32. The node power amplifier 31 preferably receives audio from the node processing unit 23 (or from other sources) and may receive audio signals using an either analog and/or digital interface (not illustrated).

The node power amplifier 31 may both be of an analog (time-continuous) or a digital (time discrete) type having either an analog input signal or a digital input signal.

According to a preferred embodiment of the invention, the preferred node power amplifier 31 is a class-D amplifier. Due to the fact that the audio signal from the driver processing unit 11 preferably is a digital audio signal, the node power amplifier 31 is preferably a class D amplifier having a digital input, thus requiring no digital-to-analog converter.

With the distributed amplification at each individual node 20, where each loudspeaker has its own node power amplifier 31, the sound quality can be improved compared to the traditional 70VRMS/100VRMS systems. In the traditional systems, the audio power signal has to pass through an inherent transformer found as a part of the loudspeaker node 20. Such transformer causes core saturation effects for low frequency signals, meaning that a filter is always invoked that attenuates these signal components and thus attenuates the low end of the frequency spectrum. Getting rid of the transformer thus enhances the sound quality with a better and more "tight" bass reproduction.

Preferably the node 20 further comprises a loudspeaker 32 that comprises one or more passive loudspeakers. In a preferred embodiment of the invention, the loudspeaker(s) is (are) of the electrodynamic type, having an impedance in the range of 2-32 Ohm.

The node power amplifier 31 and loudspeaker 32 may form part of a utility unit 36 of the node 20. The utility unit 36 may also comprise a data processor, the purpose of which may be to convert and transmit data received from a transducer such as the loudspeaker 32 (making the speaker 32 act as microphone) or other not illustrated transducers such as microphones, light sensors, smoke sensors, temperature sensors, proximity sensors or the like, or emitters or actuators, e.g. LEDs, displays, etc., or interface devices, e.g. buttons, Bluetooth transceiver, IR transceiver, connectors for wired external devices, etc. Example of use of such transducers could be a microphone, preferably connected to node processing unit 23, e.g. via an A/D-converter, which may be employed for any of the following or other uses: estimate ambient noise level or speech (e.g. to determine human presence), auto calibration, test of loudspeaker, determine location of other loudspeakers, sound level triggered burglar alarm, etc.

Such transducers could be standalone or integrated into the node 20 / bus driver 1, separate monitoring nodes connected to the powered audio bus 5, connected separately to the bus driver 1, etc. Such recorded information is transmitted (if necessary, after conversion from digital to analog or vice versa) by a suitable data processor to the bus driver 1 via the powered audio bus 5. Alternatively or in addition hereto, such information may be stored in a local memory (not illustrated).

As mentioned, the nodes 20 are preferably supplied with a DC voltage from the bus driver 1 via the powered audio bus 5 which preferably comprises at least two separate conductors 34a, 34b.

The size in terms of power consumption of a node 20 is mainly determined by the size of the loudspeaker 32 and examples of power consumption of the nodes 20 could be between 2W and 400W or higher, if needed, depending on purpose of use of the audio system 33, when operating at maximum power capability.

The fact that the nodes 20 comprise built-in data processing makes the nodes 20 intelligent thereby facilitating the creation of physical smaller nodes 20 with individual (possible remote) level control, audio source selection, etc.

As mentioned, these data processors facilitates, according to a preferred embodiment of the invention, digital signal processing, class-D modulation and facilitates receiving the digital signal transmitted via the standard or proprietary protocol as described above. In addition to the above described operations, these data processors may also facilitate operations from the following non-limiting list of operations which includes: equalizing, artificial reverberation, linear filtering, compensating the loudspeaker, limiting, compensating dynamic drop of DC voltage on the powered audio bus, registering and translation of sensor signals, frequency shift keying modulation, Class-D modulation to drive the loudspeaker, bass enhancement, speak and/or music discriminator which control equalizing speak and thereby making the speak easier to understand and/or making music sound better, etc.

It should be mentioned that some of these operations may also be facilitated by the data processors of the bus driver 1.

It should be mentioned that according to an embodiment of the invention, the bus driver 1 may at least partly be implemented as part of a node 20. Hence in this way, one single node 20 may comprise the bus driver 1 and thereby no standalone bus driver 1 may be necessary.

The illustrated bus driver 1 and nodes 20 are built from different components and it should be mentioned that the components and bus driver 1 and node 20 as such mentioned in relation to figures 8-10 may be combined in any suitable way to facilitate the desired audio system 33. Further, not mentioned components may also be needed such as a driver memory or node memory for storage of information retrieved during operation of the audio system 33 or preloaded with information relevant to operation of the audio system 33. Such memories could be of a minimum capacity such as a simple ROM only comprising an identifier such as a serial number of the node. However in most situations, the memories may be of a size capable of storing more data such as megabyte or gigabyte and of a type facilitating both reading from and writing to.

Further it should be mentioned that the fact that several data processors are mentioned should not be understood literally in that these may alternatively be implemented as one or more multifunctional data processors / units.

The audio system 33 of the present invention facilitates an intelligent audio signal distribution from bus driver 1 to individual nodes 20 and from nodes 20 to the bus driver 1 as will be described below.

Figure 11 illustrates an audio system 33 according to an embodiment of the invention comprising an audio source 8 connected to or part of a gateway also referred to as bus driver 1, transport media referred to as powered audio bus 5 or transmission line and a plurality of nodes 20. The powered audio bus 5 preferably comprises a first and a second conductor 34a, 34b.

To distribute power from an energy source internal or external to the bus driver 1 (audio power amplifier or power supply) to a passive or active node 20, the preferred choice for implementing the powered audio bus 5 is copper cables, since copper offers the best conductance. Aluminum cables could also be attractive, even though its resistivity is higher, as the total cost of cabling currently would be less than cobber cables and thereby it currently provides a better conductivity to weight ratio than copper. However, aluminum has a drawback when it comes to standard terminals, like common screw terminals, because metal oxidation will begin to act as an electrical insulator in a thin aluminum oxide layer. Further, the screw terminal requires a larger size to fit the larger wire dimension required to offer similar resistance as copper.

In relation to the distribution of an audio signal in either analog or digital form at least three options exist namely wireless using radio wave technology like WiFi, Bluetooth, ANR, ZigBee etc., optically using glass or plastic light-guides or electrically using conductive wires.

The wireless technology is at present not considered an option by professional audio integrators and consultants in that it is not considered robust enough. However for audio systems 33 with low requirements to robustness, wireless technology is an option as it most likely will be in the future for audio systems 33 having higher requirements to robustness as the wireless technology develops further. Another argument for not selecting wireless technology as the preferred technology is that wireless systems would require receiver/transmitter at the nodes which then would increase power consumption and thereby price of the audio system 33. Again, on the other hand, the benefits of the wireless system may compensate for these drawbacks in certain audio systems 33.

The optical data transfer technology has advantageous properties. First of all, the data bandwidth capabilities of an optical link are excellent. Optical fibers offer an extremely high data-rate for a given size of fiber and the signal quality loss, as a function of cable length, is low compared to electrical conductors. The downside however of optical fibers is the termination of the cable. When it has to be connected to a given device, the cable has to be cut and connected to the device through an optical receiver that translates light to an electrical signal. The cutting and mounting process is complicated, compared to a simple RJ45 plug or screw terminal connector.

Electrical conductors are preferred for use as transmission conductors 34a, 34b for carrying the audio signal from the bus driver 1 to the nodes 20 and vice versa and both in relation to analog and digital audio signal transport, a distinction between single-ended or balanced signaling can be made.

In a single-ended approach, the electrical information is placed relative to a common ground potential. This approach is primarily used for short distances and is simple and requires only a single transmitter and a single receiver for a single channel audio stream (analog or digital). However, the topology has one main drawback which is a lack of common-mode rejection.

To overcome the flaws of the single-ended communication topology, balanced signaling is preferred. This technique uses two conductors per information stream. The basic idea is to send out the information as a differential signal that holds the information as a difference between the electrical voltages on two conductors. Typically, this requires two (identical) individual transmitters that output the utility signal with opposite phase. In the receiver end, the difference is found using a differential amplifier that have a high Common Mode Rejection Ratio, meaning that any signal component common for the two conductors are canceled out. This means (in contrast to the single-ended topology) that even though common voltage potentials on the transmitter device and sender devices bounce up and down, this is not causing any false differential signal seen by the receiver.

Beside the advantage in relation to rejection of common-mode when using balanced signaling, the conductor pair, especially when the two conductors are twisted, also has much better properties regarding potential interference from and to other electrical conductors. Such interference could e.g. origin from electromagnetic disturbances from external sources (other cables in cable trays etc.).

Therefore the powered audio bus 5 according to a preferred embodiment of the invention is one type of standard commercial audio cable with insulated twisted pair cobber conductors such as the "Belden 5300U" type of security and commercial audio cable. With this said other types of cables could also be used such as shield or unshielded multi-conductor Cat5 cables or other cables, shielded or unshielded twisted pair type.

Key feature in deciding type of cable is that the cable is capable of transmitting digital signals at a high bitrate and that it complies with EMC requirements. In addition, it is preferred if existing cable e.g. used in existing 70V/100V analog audio systems could be used. Surprisingly the "Belden 5300U" (and similar) type cable facilitates transmission of digital signal at high bitrate and because the conductors are twisted, the cable are complying with EMC requirements and are commonly used in existing 70V/100V systems.

In principle, using a two conductor shielded cable gives three conductors which may be needed in some embodiments.

It should be mentioned that according to a preferred embodiment of the invention, the powered audio bus 5 is connecting a plurality of nodes 20 to the bus driver 1, preferably in a daisy chain network. Though it could be indicated from the figures of the daisy chain structure that the nodes 20 are series connected, the nodes 20 are substantially parallel connected from an electric point of view.

As mentioned the nodes 20 of the audio system 33 are preferably connected in a daisy chain network by a two conductor type transmission media also referred to as powered audio bus 5. It is preferred that the powered audio bus comprise two conductors 34a, 34b mounted directly in loop terminals also referred to as node-bus interface 21 of the nodes 20 which is illustrated on figure 11. As illustrated on figure 11, one end of each of the first and second connectors 34a, 34b is connected to a driver-bus interface 19 of the bus driver 1 and the opposite end of the first and second connectors 34a, 34b is connected to the node-bus interface 21 of the node 20a. The node-bus interface 21 of the node 20b is chained via the first and second conductors 34a, 34b to the node-bus interface 21 of the node 20a and so on.

As mentioned above, the nodes 20 are developed in such way that installation i.e. mounting of the transmission conductors 34a, 34b cannot lead to failure nor by confusing the mounting of the conductors 34a, 34b, neither to a particular terminal nor by confusing which of the node-bus interfaces 21a, 21b these conductors 34a, 34b should be mounted at. Thereby it is ensured that the audio is always in phase in that polarity of the conductors can be ignored and mounting of nodes 20 in the audio system 33 therefore becomes very easy and can be done without special knowledge to audio systems in general.

Preferably the conductors 34a, 34b of the powered audio bus 5 are connected directly to the nodes 20. Thereby additional conductors from the node 20 to the powered audio bus 5 e.g. a junction box connecting the additional conductors to the powered audio bus 5 is avoided which is an advantage in that such additional conductors could make communication of information from node 20 to bus driver 1 difficult. An example of such communication could be automatic individual node identification (e.g. node identification is sent to the bus driver 1 e.g. upon a request from the bus driver 1) or location of a node 20 in the network.

An advantage of daisy chained nodes 20 connected as described in this document is, according to the invention, that multiple audio channels can exist within a single transmission line (either as multiple conductors or as multiple digital audio channels within a single conductor pair), thereby making the audio system 33 and the installation as such more flexible. Since a single cable (powered audio bus 5) can carry the audio signal for more than one single subset of nodes 20 or zone of nodes 20, the cabling layout can be simplified and thus labor cost can be reduced. In fact, existing audio systems having a transmission line comprising at least one conductor pair can be retrofitted or updated to an audio system of the present invention.

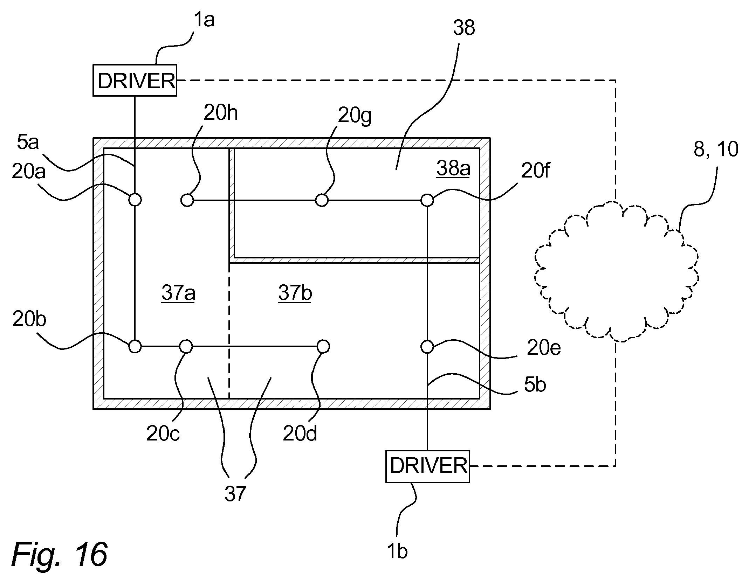

One single daisy chain of nodes 20 would potentially supply several different loudspeaker zones with individual audio channels as illustrated on figure 16 which illustrates a planar view of an audio system 33 according to the invention.

The audio system 33 of the present invention is very flexible in terms of number of audio channels, number of nodes 20 in a zone and in the daisy chain network and size or length of the powered audio bus 5 from the bus driver 1 to the last / farthest node 20 in the network.

The size of such daisy chain network could be determined by the number of audio channels and the quality of audio on these channels. According to an embodiment of the invention, a daisy chain network with two 48kHz audio channels would work fine even at a length of 100 meter of the powered audio bus 5 with sixteen 16 nodes 20 connected hereto.

With regard to the number of nodes 20 of the daisy chain, the limiting factor here is the degradation of transmission line quality and introduction of reflections each time a node 20 is added which introduces the risk of bit-errors.

Each parameter (nodes, quality, length, channels) are mutually influencing each other hence if e.g. only one channel is needed, the length / size of the daisy chain network can be increased. Another example could be if quality is required at 48kHz / 24 bit, then bandwidth may only allow two channels whereas the same bandwidth (48000*24*2 = 2.304 Mbit/sec) could be used to stream four 36kHz/16bit channels.

In general, it should be mentioned that it is preferred that the control of the nodes 20 i.e. distribution and broadcasting / producing of audio has higher priority than monitoring i.e. nodes 20 return information of the node 20 and its surroundings to the bus driver 1. The latter upstream status information may be sent at a few kbit/s, which enables that simple status information of a few bytes can be received from multiple nodes within a second by the bus driver 1.

In addition to the downstream audio stream and the upstream status, the downstream control signals i.e. queries, requests, status or user bits, etc. from the bus driver 1 to nodes 20 is also transmitted on the powered audio bus 5 e.g. at a speed of for example 96 kbit per second.

The audio system 33 preferably facilitates automated initialization i.e. upon request from the bus driver 1 each node 20 replies e.g. with type, serial number, etc.

As mentioned, the bi-directional data streaming enables end-node 20 monitoring. This enables a remote service functionality, where the entire audio system 33 including the nodes 20 and their loudspeakers 32 can be checked and precise error information is at hand before a service technician is at the location. This feature is also advantageous in the installation phase of the audio system 33, especially during installation of the daisy chain to verify the installation without the need for manually checking each individual node 20. When the bus driver 1 is connected to the internet, the remote services can be used from anywhere with connection to the internet.

The network layout illustrated on figures 11-13 is preferable a daisy chain topology, which resembles a coupling where the network bus driver 1 and network nodes 20 all sit electrically coupled in parallel or substantially in parallel. The node-bus interfaces 21a, 21b of the nodes 20 are virtually a short circuit, only having resistive loss from connectors and current sensors 22. Network examples can thus be illustrated as shown in figures 11-13 (connectors and current sensors not illustrated).

To minimize reflections in the cable constituting the powered audio bus 5, it is important to ensure that source impedance (bus driver output impedance), cable impedance and termination impedance (termination impedance is attached between bus conductors 34a, 34b in the last / farthest node 20 in a given branch or daisy chain) are identical or substantially identical. In a preferred embodiment of the invention, these three impedances (seen from a differential perspective in the range from 100kHz to 10MHz) are all in the range of 40 to 120 Ohm.

The network topology, however, is not bound to the pure daisy chain. Using Y-splitters 39 as illustrated in figure 12, the powered audio bus 5 may be divided into two (or even more) branches. To keep the impedance matching intact, it is important to insert a termination impedance in the end of both branches. It is furthermore required to add impedance matching means in the Y-splitters 39.

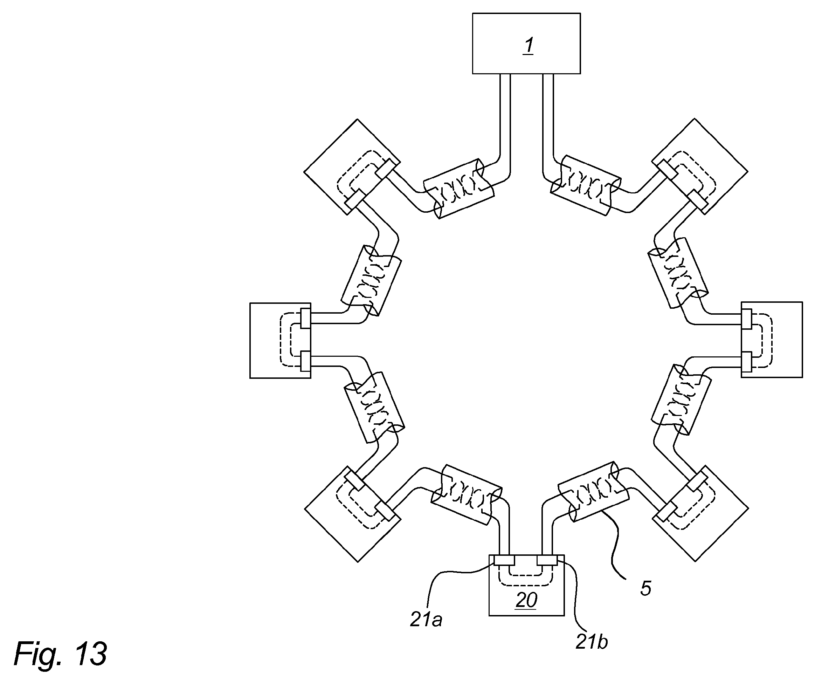

Figure 13 illustrates an example of a ring topology powered audio bus according to an embodiment of the invention. A powered audio bus 5 with several daisy-chained nodes 20 as described above are connected at each end to two individual audio bus ports of a bus driver 1. The bus driver is configured to handle the two ports as one powered audio bus of a ring topology, or detects this situation itself, e.g. by being able to receive its own control data of one port at the other port. Preferably, the bus driver makes one of the ports inactive, and may in various embodiments apply a transmission line impedance at the inactive port, or rely on the node nearest to the inactive port to be detected as farthest node and be instructed to apply its transmission line impedance as described above. An advantage of ring-topology embodiments is that in the case of cable break, disconnection of a node or other events that amputates a part of the powered audio bus from the bus driver, this situation may be detected by manual alarm input, by detecting impedance mismatch, low-quality communication, or by other automatic means, and upon concluding that a part of the bus is unreachable, the bus driver may activate the second port, perform node enumeration procedures on both ports, and thus proceed operation with two individual, powered audio buses. In other words, the ring topology enables a redundancy which is highly advantageous for critical audio systems, e.g. emergency or evacuation systems. The ring topology may also be implemented by various other embodiments, for example by providing an individual bus driver at each end of a powered audio bus, and either manually or automatically coordinate between the two bus drivers which one is active during normal operation, thereby still allowing the other bus driver to take over part of the powered audio bus in case of disruption. Thereby the bus driver function is also made redundant, and may advantageously be located in different physical locations to preserve one driver even in case of local fire, power loss, etc. A variation of the ring-topology embodiment comprises two or more bus drivers being connected to the powered audio bus at different locations, e.g. four bus drivers being distributed along the powered audio bus, and mutually coordinating or being coordinated which one operates as active bus driver during normal operation. In case of bus failure, a re-coordination takes place to determine the most appropriate bus drivers to take over operation of any amputated parts of the bus, and each active bus driver performs a re-enumeration of connected nodes.

Various other topology embodiments, including for example combinations of the topologies described and shown with reference to figures 11 - 13 are possible and suitable for different applications, building layouts, purposes, safety regulations, etc.

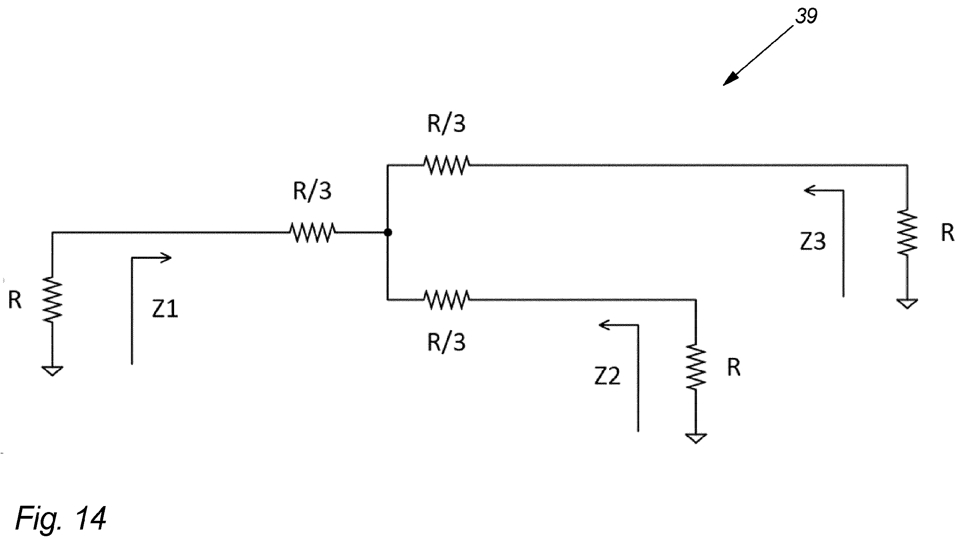

Impedance matching in a Y-splitter 39, as for example suitable for a branched powered audio bus as shown figure 12, can be established using three identical impedances, also called a "hairball network" as illustrated in figure 14 (single ended for the sake of simplicity). Seen for any end of this star configuration, the impedances Z1, Z2 and Z3 equals R/3 + (R/3+R)/2 = R, which ensures that reflection related problems are minimized. However, the network introduces an attenuation of 6dB from one branch end to another.

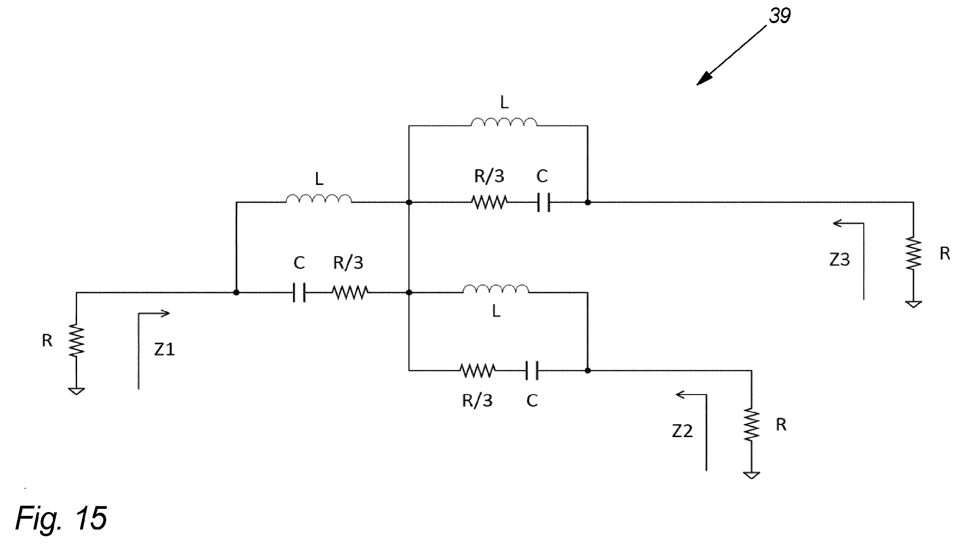

For a 2-line DC powered bus, the pure resistor based approach is not suitable, since the relatively small resistors will introduce a significant power loss when drawing current through the bus. To circumvent that problem, the impedance matching means may be designed so that impedance matching resistors only "exist" for AC, leaving out DC. One solution is illustrated in figure 15, where resistors are DC decoupled using capacitors and the DC power distribution is handled through the inductors L.

Figure 16 illustrates a layout of the audio system 33 according to an embodiment of the invention. A first bus driver 1a controls nodes 20a-20d on a first powered audio bus 5a and a second bus driver 1b controls nodes 20e-20h on a second powered audio bus 5b.

The nodes 20a-20h may be located in one or more environments. An environment may for example be defined by a room. A zone including a subset of nodes 20 may be defined more or less related to environments and bus, and provides an abstraction level for assigning any loudspeaker to zones regardless of their environment and bus topology. Typically, assignment to zones is used to broadcast the same audio or controls to the nodes of a common zone. It should be mentioned that the grouping of subsets of nodes 20 in zones or environment may include nodes 20 controlled by different bus drivers 1. Hence a zone or subset of nodes 20 should be understood as one or more nodes 20 grouped and thereby playing the same audio signal.

Figure 16 illustrates two daisy chains of nodes 20a-20d and 20e-20h distributed over two environments, rooms 37 and 38. The first room 37 may be divided in two zones 37a and 37b e.g. based on use of the room 37, hence zone 37a may be a busy and noisy area and zone 37b is a relaxing area of room 37. Room 38 represents only one zone denoted 38a.

Now if different audio signals are to be broadcasted in environments 37 and 38, the nodes 20a-20h have to be divided in zones. Hence zone 1 comprising node 20a-20c and 20h, zone 2 comprising nodes 20d and 20e and zone 3 comprising nodes 20f and 20g.

The subset of nodes representing zones 1-3 is either automatically or manually configured to the respective zones facilitating the playing of different audio or the same audio at different sound levels. Playing an audio signal should be understood as converting an audio signal to speech, music, tones, etc. audible at least to humans.

In an embodiment, the nodes may be pre-configured during installation, for example with regard to zone assignment, audio channel selection, audio level, or other basic configuration parameters. The pre-configuration of a node may for example be facilitated by the nodes comprising a hardware selector and/or a programmable memory, which the installer may use to set one or more parameters, and which may be read by internal circuitry after power-on. For example, a rotary encoder, a DIP-switch (DIP: dual inline package), an NFC-receiver (NFC: near field communication), an RFID-tag (RFID: radio frequency identification), etc., may be provided at the node. During installation, there is access to the pre-configuration selector at the node, and the installer may pre-configure for example which zone the node initially belongs to, and an initial attenuation level. The pre-configuration may even be applied before the node is connected to the powered audio bus, and thereby before it receives any power. The settings may be part of an installation project plan or be decided spontaneously by the installer. However, as such pre-configuration is prone to human error and/or change of mind after closing off the installation, ceiling, wall, etc., an embodiment comprising a verification of the pre-configuration is therefore very advantageous, as is a preferred embodiment allowing the bus driver to overrule the pre-configuration of a node.

To facilitate the automatic configuration of zones, the bus drivers 1a and 1b may be connected either directly or via an external audio source 8 or external controller 10.

Accordingly an aggregated environment comprises a set of environments 37, 38 each comprising one or more of the loudspeakers (also referred to as nodes) of the loudspeaker system. Each environment comprises a physical area e.g. a hallway, a conference room, a restaurant or a similar physically delimited environment. In other words, the environments are defined by physical structures serving as acoustical and/or visual obstacles such as walls, floors and ceilings, doors and windows, partitions, plants, curtains, or even relatively large distances of space. The aggregated environment may thereby for example be an office building, restaurant building, etc., comprising a set of environments. The aggregated environment is limited to the aggregation of environments comprising loudspeakers of the loudspeaker system, and may thus be limited to a part of a building, floor, etc., and comprise a single environment or several environments. The loudspeaker system may comprise loudspeakers installed in one or more environments.

The topology of the loudspeaker system (also referred to as daisy chained nodes or audio system) in terms of electrical or communicative connections may often be quite unrelated to the topology of the environments.

In an embodiment, sound measurements may be analyzed for information about acoustic obstacles obtained by analyzing when certain microphones do not hear or only vaguely hear the sound from certain loudspeakers, thereby enabling a grouping of the loudspeakers in different of said environments, as well as information about reflective surfaces enabling estimating distances between loudspeakers and surfaces, thereby making it possible in certain embodiments to estimate the dimensions in two or three dimensions of the environments, e.g. the dimensions and shape of a room. In an embodiment, visual information e.g. from a camera, information about physical properties from distance measurements, e.g. by laser or accelerometer, positioning systems or blue prints or other formal data or manually inserted data, etc., may be analyzed to estimate the dimensions of environments and relative or absolute positions of the loudspeakers. In an advantageous embodiment, automatically or manually determined information about environments may be used to make a basic suggestion or basic starting configuration for how the loudspeakers could be divided into loudspeaker zones for the subsequent normal operation. In many practical applications, the basic starting configuration established this way will be perfectly suited for most uses.

The topology of the environments may not necessarily correspond to the topology of the loudspeaker zones. In other words, network-topology, loudspeaker connections, environments and loudspeaker zones are non-constrained, but at least partly overlapping.

In an advanced embodiment, the assigned loudspeaker zones may not be static or permanent, but may be changed according to the application of the room or hall. Applications such as "live concert", "conference", or "lounge bar" may require the loudspeakers to fulfill different roles.

As can be seen from the above description, the inventive audio system 33 has several advantages of which the feature of power and bidirectional data transmitted over a two wired powered audio bus 5 between the bus driver 1 and the nodes 20 and the polarity-indifference of the two wires 34a, 34b are especially advantageous.

Of these advantages could at least be mentioned individual fault monitoring of loudspeaker 32, individual gain, delay and equalizing with high granularity, dynamic paging and grouping of nodes 20, multiple node types on the same daisy chain, more than one zone or channel on the same daisy chain, possibility of retrofitting or updating existing audio systems without need of installing new transmission line between nodes of the existing system, equal audio quality in first and last node 20 of the network, facilitates automatically debugging locating at which node an error may be present and use of thinner conductors 34 compared to traditional comparable audio systems.

The reason for being able to use thinner conductors 34 at the present audio system 33 compared to e.g. 70VRMS is that at 70VRMS, the RMS of the audio signal is significantly lower than at the 40V - 50V DC system suggested by the present invention. Hence the currents and thereby losses of the present audio system 33 are reduced significantly as compared to a 70VRMS system.

Compared to the traditional 70/100V installation technology, at least the following advantages exist:
- Cabling may be phase indifferent. Swapped conductors in the cable will not cause 180 degree phase change for the resulting acoustical output.
- More than one audio channel may be transported on a single cable (twisted pair) simultaneously. This means that multiple zones can be covered using a single daisy chain (cable).
- The system may incorporate a node enumeration process that establishes a list holding all bus nodes including the physical (electrical connection) sequence from first to last node on the bus. This list ensures that all electrical connections are functioning.

Deviations from the list obtained during last power-up, may be reported (automatically via email or similar) to a given location.
- The system may incorporate a self-test feature, which tells the installer/maintenance personnel where the last functional node on the cable is located.
- Each node may implement individual level control, EQ and other DSP related functions which can be remotely controlled. This is an advantage when the system is installed in an environment where it would be advantageous to shift "sound profile" as function of the environment, e.g. in a restaurant, where it would be desirable to adjust sound level in only a sub-section of the total restaurant space for some occasions - or even differentiated audio material (corresponding to dynamic/virtual routing capability).
- The status of each individual node can be monitored, meaning that loudspeaker (and amplifier) status (temperature, power consumption, impedance) can be continuously followed.
- The sonic quality may be improved, due to the absence of the audio power transformer, which typically requires that the audio signal is high-pass filtered to avoid distortion for low frequencies. Driving the loudspeaker directly without this transformer will enable a richer and more tight bass reproduction.
- The power loss in the cabling will be lower compared to a 70/100V system when reproducing audio material. For typical audio signals, the crest factor is 12dB. This means that the RMS voltage for full scale audio in a 70V (100V peak) system is only 25V, compared to the proposed system, maybe having 48VDC (=48Vrms) on the bus. This difference will cause a current in the 70V system, that are roughly twice the current in the 48V system, turning into four times higher cable power loss (P = 12·R), assuming similar cable thickness (resistive conduction loss). This fact may be utilized into either (1) using thinner cables, or (2) offer increased cable length for a given cable dimension (and acceptable loss).
- The system may further comprise several other types of sensors not directly related to the audio reproduction. Examples may be light sensors, smoke sensors, gas sensors (CO), proximity sensors or any other kind of sensor. Information from these sensors may be relayed back to the bus driver 1 and further onto the internet and/or other equipment connected to the driver and/or bus.
- The bus peak voltage is lower compared to 70V (100V peak) or 100V (140V peak). Using 48V means that the system may be mounted by "anybody", since 48V is considered non-hazardous, whereas the installation of 70/100V systems may require certified personnel.

The description of the figures has focused on the elements providing a feature to the invention. Therefore it should be mentioned that other not mentioned elements may also be implemented in various embodiments. Such elements could be capacitors mounted between the transmission conductors 34 of the powered audio bus 5 and the driver processing unit 11, the data transmitter and receiver of the bus driver 1 and the transmission conductors 34 of the powered audio bus 5 which is used as a filter for preventing the DC power signals from interfering with the processing of the data.

In the same way, an inductor may be present between the power supply 3 of the bus driver 1, the power supply 35 of the node 20 and the transmission conductors 34 of the powered audio bus 5 to filter and ensure that the data communication does not interfere with the power supply.

It should be mentioned that any elements of any of the figures referred to in this description may be combined to obtain an audio system 33 complying with specific requirements. Further, many elements of the figures are state of the art elements and are therefore not described in details in that they and their functions are known by the skilled person.

### List

- 1.: Bus driver
- 2.: Driver power supply
- 3.: Driver power converter
- 4.: First driver filter
- 5.: Powered audio bus
- 6.: Driver current sensor
- 7.: Driver audio interface
- 8.: External audio source
- 9.: Driver interface unit
- 10.: External controller
- 11.: Driver processing unit
- 12.: Second driver filter
- 13.: First communication channel
- 14.: First driver analog-to-digital converter
- 15.: Third driver filter
- 16.: Second communication channel
- 17.: Driver digital transmitter
- 18.: Second driver analog-to-digital converter
- 19.: Controller-bus interface
- 20.: Node
- 21.: Node-bus interface (21a first node-bus interface, 21b second node-bus interface)
- 22.: Node current sensor (22a first node current sensor, 22b second node current sensor)
- 23.: Node processing unit
- 24.: First node analog-to-digital converter
- 25.: First node filter
- 26.: Transmission line termination unit
- 27.: Second node filter
- 28.: Node digital receiver
- 29.: Third node filter
- 30.: Node transmitter
- 31.: Node amplifier
- 32.: Loudspeaker
- 33.: Audio system
- 34.: Transmission line conductor (34a first transmission line conductor, 34b second transmission line conductor)
- 35.: Node power supply
- 36.: Utility unit
- 37.: First room (37a first zone, 37b second zone)
- 38.: Second room (38a third zone)
- 39.: Y-splitter
- LS: Loudspeaker system
- SP: Loudspeaker
- BD: Bus driver
- PL: Physical location
- SPI: Loudspeaker identifier
- AENV: Aggregated environment
- ENV: Environment
- MDEV: Mobile device
- CM: Camera
- DISP: Display
- COMP: Computing processor arrangement
- MEM: Memory
- BAT: Battery
- IM: Image
- ENVP: Environment properties
- REL: Relations
- LDB: Location database
- ZN: Zone
- UI: User interface
- IMREF: Image reference
- ALDB: Abstraction level database
- AL: Abstraction level
- CC: Central controller
- CA: Communication arrangement

## Claims

1. A method of relating a physical location of a loudspeaker of a loudspeaker system (LS) to a loudspeaker identifier (SPI),
the loudspeaker system (LS) comprising a plurality of loudspeakers (SP) connected by at least one loudspeaker bus and communicatively coupled to a bus driver (BD),
the loudspeakers (SP) being mounted at different locations in an aggregated environment (AENV), and
the aggregated environment comprising one or more local environments (ENV);
the method comprising the steps of
- providing a mobile device (MDEV) comprising a camera (CM), a display (DISP), a memory arrangement (MEM) and a computing processor arrangement (COMP) powered by a battery (BAT);
- the computing processor arrangement (COMP) processing data on the basis of algorithms stored in said memory arrangement (MEM);
the display being arranged for displaying images (IM) captured by the camera (CM) and processed by the computing processor arrangement (COMP);
- capturing an image of an environment (ENV) by means of the camera (CM) of the mobile device (MDEV);
- extracting environment properties (ENVP) on the basis of the image (IM) by means of said computing processor arrangement (COMP);
- calculating the physical location (PL) of one or more loudspeakers (SP) on the basis of said environment properties (ENVP);
- manually or automatically relating the physical location of one or more loudspeakers as a relation (REL) to a corresponding loudspeaker identifier (SPI) at least partly on the basis of said calculated physical location (PL); and
- storing said relation (REL) in a location database (LDB) associated to said bus driver (BD).

2. A method of relating a physical location of a loudspeaker according to claim 1, wherein the loudspeakers (SP) of the loudspeaker system (LS) are individually addressable by the bus driver (BD) for rendering of audio provided by the bus driver (BD).

3. A method of relating a physical location of a loudspeaker according to claim 1 or 2, wherein the loudspeakers (SP) of the loudspeaker system (LS) are individually addressable by the bus driver (BD) for rendering of audio provided by the bus driver (BD) under the control of a central controller (CC).

4. A method of relating a physical location of a loudspeaker according to any of the preceding claims, wherein the loudspeaker system comprises a bus driver (BD) communicatively coupled with one or more loudspeaker buses.

5. A method of relating a physical location of a loudspeaker according to any of the preceding claims, wherein the loudspeaker system comprises two or more loudspeaker buses, wherein the buses are communicatively coupled to said bus driver enabling addressing of loudspeakers arranged in more than one loudspeaker bus and wherein the addressing of the loudspeakers arranged in more than one loudspeaker bus is controlled by a central controller (CC) communicatively coupled to said bus driver.

6. A method of relating a physical location of a loudspeaker according to any of the preceding claims, wherein the physical location of the one or more loudspeakers (SP) is determined on the basis of said image (IM) and a user provided image reference (IMREF).

7. A method of relating a physical location of a loudspeaker according to any of the preceding claims, wherein the physical location of the one or more loudspeakers (SP) is determined on the basis of said image (IM) and automatic recognition of loudspeakers (SP) in the captured image (IM) and wherein the automatic recognition is calculated on the basis of the image (IM) by means of said computing processor arrangement (COMP).

8. A method of relating a physical location of a loudspeaker according to any of the preceding claims, wherein the physical location is determined in a 3D model of the aggregated environment.

9. A method of relating a physical location of a loudspeaker according to any of the preceding claims, wherein the aggregated environment is divided into at least two different zones which may be individually addressed by the bus driver of the system.

10. A method of relating a physical location of a loudspeaker according to any of the preceding claims, wherein a central controller (CC) is arranged to control reproduction of audio signals in said loudspeaker system (LS) on the basis of said established physical locations (PL) or on the basis of said location abstraction level database (ALDB), and wherein the physical locations being associated to abstraction levels (AL) defined by a user at least during an initial setup of the system, thereby enabling a central controller (CC) to control reproduction of audio signals in one or more loudspeaker (SP) identified with reference to said location abstraction level database (ALDB).

11. A method of relating a physical location of a loudspeaker according to any of the preceding claims, wherein said physical location is automatically established by means of said mobile device and wherein the corresponding loudspeaker identifier (SPI) is established by an automatic test routine run by the mobile device (MDEV) and the loudspeaker system (LS).

12. A method of relating a physical location of a loudspeaker according to any of the preceding claims, wherein said physical location is automatically established by means of said mobile device as extracted environment properties (ENVP) and wherein the corresponding loudspeaker identifier (SPI) is established by a semi-automated test routine run by the mobile device (MDEV) and the loudspeaker system (LS).

13. A method of relating a physical location of a loudspeaker according to any of the preceding claims, wherein the relations (REL) are modified subsequent to redesign of the system.

14. A loudspeaker system (LS) comprising a plurality of loudspeakers (SP) configured for audio reproduction of audio signals under the control of a central controller (CC), and wherein the central controller (CC) establishes audio reproduction of specific or groups of loudspeakers on the basis of a correlation between the physical location of loudspeakers of the loudspeaker system and corresponding loudspeaker identifiers (SPI) and wherein the location of loudspeakers are established at least partly on the basis of the method according to any of the claims 1-13.

15. A method of installing a loudspeaker system (LS) comprising a plurality of loudspeakers (SP), the method comprising the steps of
- mounting the loudspeakers covering one or more environments (ENV) of an aggregated environment (AENV) and driven by a bus driver (BD);
- defining a number of abstraction levels and storing these in an abstraction level database (ALDB);
- initializing relations (REL) of a relations database (RDB);
- correlating the relations and the abstraction levels thereby obtaining a correlation between the abstractions levels and the physical locations of the loudspeakers determined by the relations of the relation database (RDB); and
- integrating the abstraction levels into a user interface (UI) thereby facilitating an operator to address loudspeakers of defined abstraction levels with audio via said bus driver (BD).
